# FASCICULE DE BREVET EUROPEEN

(11) **EP 3 700 332 B1**
(45) Date de publication et mention de la délivrance du brevet: **28.08.2024**
(21) Numéro de dépôt: 18789454.8
(22) Date de dépôt: 26.10.2018
(51) Int. Cl.: A01K 61/54, A01K 61/55

(54) **DISPOSITIF D'ÉLEVAGE EN MER D'ANIMAUX D'AQUACULTURE**
VORRICHTUNG ZUR AUFZUCHT VON AQUAKULTURTIEREN AUF DEM MEER
DEVICE FOR REARING AQUACULTURE ANIMALS AT SEA

(30) Priorité: 27.10.2017 FR 1760134; 05.10.2018 WO PCT/EP2018/077223
(43) Date de publication de la demande: 02.09.2020
(73) Titulaire: Genocean, 17410 Saint-Martin-de-Ré (FR)
(72) Inventeur: MARISSAL, Eric, 17410 Saint-Martin-De-Re (FR); PINCOT, Lila, 17630 La Flotte (FR)
(74) Mandataire: Lavoix
(86) Numéro de dépôt international: PCT/EP2018/079467
(87) Numéro de publication internationale: WO 2019/081740

(56) Documents cités:
- WO-A1-96/31117
- FR-A- 1 544 707
- FR-A1- 2 437 781
- FR-A1- 2 953 367
- FR-A1- 3 003 128
- US-A1- 2011 265 730

## Description

L'invention concerne en général les dispositifs d'élevage en mer de coquillages et plus particulièrement les huîtres.

Dans la majorité des pays ostréicoles, les huîtres sont consommées décoquillées. Elles sont cuites avant d'être consommées. En France, et dans d'autres pays, les huîtres sont consommées vivantes dans leur coquille. Ces deux modes de consommation différents ont concouru à deux types de mode d'élevage distincts. En effet la consommation crue dans la coquille exige une qualité irréprochable de la forme de celle-ci, une importance moindre étant accordée à la qualité de la chair. Pour la consommation de la chair décoquillée aucune importance n'est accordée à la forme de l'huître.

Ainsi, dans la consommation décoquillée, le consommateur exige un poisson très charnu, susceptible de conserver un certain volume et une certaine texture après cuisson, comme pour les moules. Dans l'immense majorité des cas, les huîtres sont alors élevées en eau libre, collées sur leur support d'origine jusqu'à une taille et jusqu'à un âge suffisants. Elles sont récoltées à des périodes adéquates pour que la quantité de chair et la qualité d'engraissement soient conformes aux attentes du consommateur.

Dans le cas d'huîtres consommées crues dans leurs coquilles, la zootechnie s'est orientée vers l'élevage des huîtres une-à-une, dans des enceintes susceptibles d'être secouées régulièrement pour éviter qu'elles ne se recollent entre elles.

Afin de permettre ces manipulations, les zones d'élevage sont délimitées exclusivement dans la zone intertidale permettant l'accès à marée basse du personnel chargé du brassage des enceintes. Ces enceintes sont en général des poches en maillage plastique, posées sur des tables en barres d'acier ancrées sur la plage. Ainsi concentrées et manipulées, les huîtres assurent correctement leur croissance, mais n'atteignent que très rarement une qualité de chair équivalente à ce que recherche le consommateur averti, habitué à consommer les huîtres décoquillées.

La zone découvrante, c'est-à-dire la zone intertidale, est caractérisée par la force des vagues, fonction elle-même de l'exposition du littoral concerné au vent et à la houle du large. Sur de rares sites, il est ainsi possible, du fait d'un brassage particulièrement puissant et régulier par les vagues, d'obtenir non seulement des huîtres suffisamment roulées dans les poches d'élevage pour que leurs coquilles soient érodées, arrondies et bien creuses, mais aussi un taux de chair exceptionnel. Ces huîtres sont qualifiées de « super spéciales ». Le phénomène mis en jeu est simple : l'huître quand sa capacité alimentaire est satisfaite, privilégie toujours jusqu'à un certain âge (3 ans) l'affectation de l'énergie à la croissance coquillière au détriment de l'engraissement. Sur les sites fortement exposés aux vagues, le fait que les coquilles sont roulées dans les enceintes d'élevage très régulièrement lors de la marée descendante, quand les enceintes émergent dans les vagues, permet de briser en partie la croissance coquillière journalière et d'obliger l'animal à favoriser une croissance de la coquille en épaisseur, plus lente, mais garante d'une forme creuse et arrondie. Cette opération serait impossible à réaliser à la main pour des raisons de durée d'intervention à marée basse, compte-tenu du temps nécessaire au personnel pour la réaliser sur de grandes surfaces d'élevage.

Dans le même temps, la proportion d'énergie non affectée à la croissance coquillière est réorientée vers l'engraissement, favorisant ainsi un taux de chair très élevé, caractérisé par la qualité de « super spéciale ».

Cette qualité peut être chiffrée comme un taux de remplissage de la cavité palléale de 60% après ouverture et 10 minutes d'égouttage. Cette association qualité de forme et taux de chair élevé constitue le très haut-de-gamme qui, consommé cru, est très apprécié par les consommateurs dans tous les pays du monde.

Malheureusement, les sites dans lesquels ce travail de roulage des coquilles est assuré naturellement dans des enceintes classiques type poches ostréicoles sont rares. Ces sites doivent en effet présenter une richesse alimentaire suffisante et une agitation forte et constante, mais jamais excessive afin d'éviter une destruction totale du site d'élevage en cas de tempête.

Depuis quelques années, un certain nombre d'ostréiculteurs ont eu l'idée de créer des enceintes d'élevage dites suspendues, du type balancelle, dans lesquelles les huîtres seraient plus facilement mises en mouvement que dans des poches ostréicoles traditionnellement fixées sur les tables.

Les enceintes sont suspendues à des câbles tendus horizontalement, ou sous des barres en acier portées des tables ostréicoles. Elles sont très mobiles, et sont donc susceptibles de transférer aux huîtres qu'elles contiennent le mouvement imprimé par les courants marins et par des vagues de moindre amplitude que celles nécessaires au brassage des huîtres dans les enceintes fixes.

Il existe plusieurs modèles d'enceintes suspendues : la plupart sont des enceintes tubulaires, pourvues ou non d'une porte à une des extrémités, et suspendues à des câbles fixés à leur sommet.

Ces modèles présentent un certain nombre de handicaps sérieux, qui limitent énormément leur usage.

Ces enceintes sont très fragiles. Elles sont efficaces pour brasser des huîtres dans des conditions moyennement sévères (courant marin, houle ...) mais ne supportent pas les conditions sévères acceptées par les enceintes fixes. Elles ne sont donc utilisables qu'en milieu semi-lagunaire, protégé, et ne peuvent donc être employées que dans une très faible proportion des sites d'élevages ostréicoles pour la production d'huître à la française.

Deuxièmement, compte-tenu du mouvement oscillant, l'ensemble de ces enceintes a spontanément été conçu selon une forme cylindrique qui laisse peu de surface disponible pour une masse conséquente d'huîtres. En effet, les huîtres s'accumulant au point bas de l'enceinte, elles disposent d'une faible surface pour s'étaler. Dès que la croissance est suffisante pour remplir la moitié de l'enceinte, les huîtres s'empilent et les mouvements ne sont plus suffisants pour rouler les huîtres. L'élevage se réoriente naturellement vers une dégradation de la qualité de la coquille et de la chair.

Troisièmement, une conséquence accessoire de la forme cylindrique est l'empilement des huîtres, celle-ci ne pouvant rouler dans l'enceinte que si les conditions d'agitation sont très fortes. Ceci est assez incompatible avec la fragilité du matériel.

Quatrièmement, ces enceintes cylindriques présentent un encombrement important, et occupent donc un énorme volume de stockage. Ceci limite la capacité de transport des huîtres, et complique la possibilité d'empiler les enceintes de manière stable sur les navires ou les remorques de manutention par comparaison avec les poches ostréicoles plates qui s'empilent aisément et ne présentent qu'un volume légèrement supérieur à celui des huîtres transportées.

Cinquièmement, ces enceintes sont très difficiles à nettoyer, car elles présentent une multitude de faces et un volume intérieur inaccessible au jet de lavage.

Sixièmement, elles ne peuvent être retournées, et subissent donc un encrassement par les algues sur la face éclairée et par les ascidies sur la face inférieure, à l'abri du soleil. Ceci occasionne rapidement une occultation du maillage privant ainsi les huîtres à l'intérieur du flux d'eau nécessaire à leur bonne alimentation.

Pour pallier une partie des difficultés ci-dessus, FR 2 576 484 propose d'ajouter un flotteur à l'extérieur de l'enceinte. Ainsi, l'enceinte se retourne entre la marée haute, pendant laquelle elle flotte, et la marée basse, pendant laquelle elle pend. Il est clair que ce retournement permet un meilleur brassage des huîtres, notamment au moment de l'émergence à marée descendante. Toutefois, un tel ensemble n'est utilisable que sur l'estran, c'est-à-dire dans les zones découvertes à marée basse.

Un certain nombre d'essais ont aussi été réalisés en eau profonde dans des cages regroupant un grand nombre d'enceintes d'élevage, soit fixes comme des poches ostréicoles, soit mobiles avec des balancelles. Les essais jusqu'à ce jour ont tous conduit à de mauvais résultats. En effet, les croissances exceptionnelles espérées par l'immersion constante sont bien au rendez-vous, mais l'immobilité sous-marine de ces structures conduit à des huîtres qui atteignent très jeunes et en un temps record la taille commerciale, et qui sont donc très fragiles, très déformées et qui présentent des taux de chair très médiocres. Pourtant un élevage en cage fonctionnel présenterait de gros avantages : un raccourcissement significatif de la durée d'élevage, des économies de main d'oeuvre et une meilleure ergonomie par l'industrialisation du travail de nombreuses enceintes en même temps dans une même cage.

Le document WO 96/31117 A1 décrit un dispositif d'élevage en mer de coquillages conforme au préambule de la revendication indépendante 1.

Dans ce contexte, l'invention vise à proposer un dispositif d'élevage en mer qui procure un bon brassage et qui puisse être utilisé sur une zone plus vaste.

A cette fin, l'invention selon un premier aspect porte sur un dispositif d'élevage en mer de coquillages selon la revendication 1.

L'invention repose donc sur l'association d'une structure ayant au moins une enceinte pivotante, placée en fond de mer, typiquement en eau profonde,_et d'un flotteur à hauteur choisie dans l'intervalle du marnage. La structure et l'enceinte sont de tout type adapté, l'enceinte pouvant être par exemple une simple poche ostréicole fixée sur un plateau métallique pivotant.

La longueur de la liaison souple est choisie pour que, à au moins un moment au cours du cycle de la marée, le flotteur flotte à la surface de l'eau avec la liaison souple tendue, de telle sorte que les déplacements de l'eau dus aux vagues soient transmis par le flotteur et la liaison souple à l'enceinte d'élevage.

Le dispositif d'élevage peut ainsi être utilisé en eau profonde, c'est-à-dire dans une zone où les enceintes d'élevage ne sont pas découvertes à marée basse. Il devient possible d'exploiter de vastes surfaces maritimes en dehors de l'estran, résolvant ainsi les problèmes de conflit d'usage.

Le dispositif peut en outre présenter une ou plusieurs des caractéristiques des revendications dépendantes 2 à 13.

Selon un second aspect, l'invention porte sur un ensemble selon la revendication 14.

Selon un troisième aspect, l'invention porte sur un procédé d'élevage en mer de coquillages, selon la revendication 15.

Avantageusement, le procédé peut présenter les caractéristiques de la revendication dépendante 16.

D'autres caractéristiques et avantages de l'invention ressortiront de la description détaillée qui en est donnée ci-dessous, à titre indicatif et nullement limitatif, en référence aux figures annexées, parmi lesquelles :
- la figure 1 est une représentation schématique simplifiée d'un dispositif d'élevage selon un premier mode de réalisation qui ne fait pas partie de l'invention ;
- la figure 2 illustre de manière schématique le mouvement ascendant de l'une des enceintes d'élevage du dispositif de la figure 1,
- la figure 3 illustre le mouvement descendant de la même enceinte d'élevage ;
- la figure 4 est une illustration plus précise de plusieurs enceintes du dispositif d'élevage de la figure 1, en vue de dessus ;
- les figures 5 et 6 sont des vues respectivement de face et de côté d'une demi-enceinte utilisée pour constituer les enceintes de la figure 4 ;
- les figures 7 et 8 sont des vues agrandies de détails de la demi-enceinte des figures 5 et 6 ;
- la figure 9 est une vue de côté d'un organe de liaison du dispositif de la figure 4, avant fixation à l'enceinte d'élevage ;
- les figures 10 à 12 sont des vues en perspectives de l'organe de liaison de la figure 9, respectivement monté sur l'enceinte d'élevage, en position ouverte stable, et refermé autour du châssis ;
- la figure 13 est une vue de dessus de organe de liaison de la figure 12, après fixation à l'enceinte d'élevage et au châssis;
- la figure 14 est une vue en perspective d'une des enceintes d'élevage de la figure 4, montrant les zones de butée renforcées et les organes de blocage ;
- la figure 15 est une représentation schématique simplifiée en perspective du dispositif d'élevage de la figure 1, illustrant la façon dont il est possible de retourner les enceintes d'élevage ;
- la figure 16 illustre un second mode de réalisation selon l'invention, dans une situation où le flotteur se trouve à mi-marée au niveau de la surface de la mer ;
- les figures 17 et 18 sont des représentations schématiques de côté du dispositif d'élevage de la figure 16, à marée haute et à marée basse ;
- la figure 19 illustre la façon dont différents dispositifs d'élevage selon la figure 16 peuvent être disposés le long de l'estran ;
- la figure 20 illustre une variante de réalisation du second mode de réalisation, dans laquelle le système assurant la suspension des enceintes comprend une guirlande de flotteurs disposée dans la zone de marnage et un flotteur interne logé dans chaque enceinte ;
- la figure 21 illustre un autre mode d'agencement des châssis sur lesquels sont montées les enceintes ;
- la figure 22 illustre une autre variante du dispositif d'élevage de la figure 16.

L'invention porte sur un dispositif d'élevage en mer de coquillages, et plus particulièrement d'huîtres. En variante, les coquillages sont toute sorte de bivalves comme des palourdes, des moules out tout autre type de coquillage.

Ce dispositif est prévu pour l'élevage en mer. Cet élevage peut être effectué au large des côtes ou dans des pertuis, des estuaires ou des rias, ou encore dans des étangs communiquant avec la mer ou dans tout autre endroit adapté.

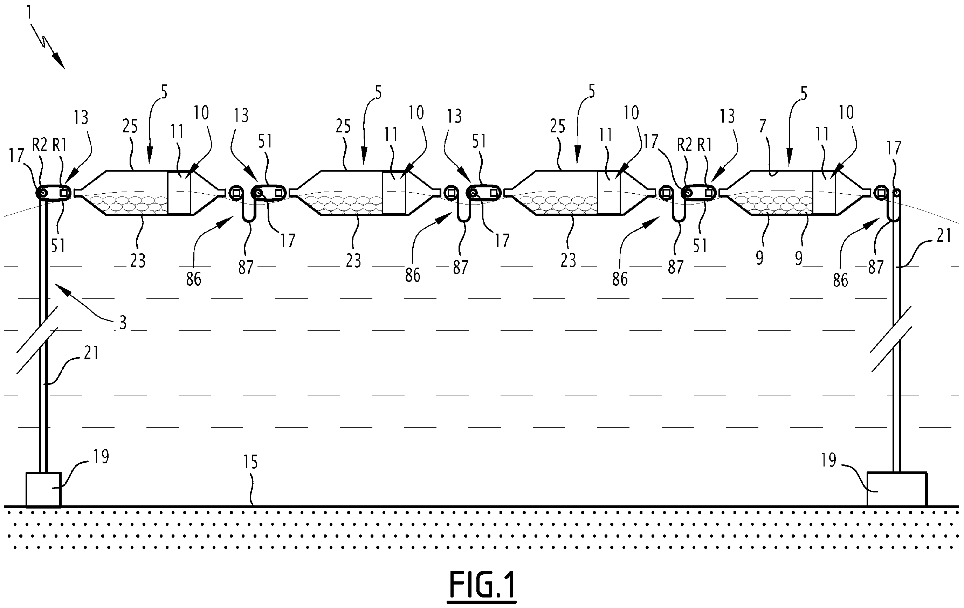

Comme illustré sur les figures 1 à 3, représentant un premier mode de réalisation non conforme à l'invention, le dispositif d'élevage 1 comprend :
- un châssis 3 ;
- au moins une enceinte d'élevage 5 délimitant intérieurement un volume de réception 7 pour les animaux d'aquaculture 9 ;
- un dispositif flotteur 10 lié à ladite au moins une enceinte d'élevage 5 ;
- une liaison 13 de ladite au moins une enceinte d'élevage 5 au châssis 3.

Le châssis 3 est prévu pour être placé en fond de mer. Typiquement, il repose sur le fond 15 de la mer. Il est fixe par rapport au fond marin 15.

Dans le premier mode de réalisation, le châssis 3 comporte une pluralité de barres métalliques 17 parallèles les unes aux autres et espacées les unes aux autres au moins horizontalement.

Par exemple, les barres métalliques 17 sont placées à la même distance du fond 15.

Le châssis 3 comporte par exemple des gueuses 19 reposant sur le fond marin 15, supportant des poteaux rigides 21 auxquels sont rigidement fixées les barres métalliques 17. Les barres métalliques 17 sont régulièrement écartées les unes des autres suivant une direction qui est horizontale sur la figure 1.

Dans le premier mode de réalisation, le dispositif d'élevage comporte une pluralité d'enceintes d'élevage 5, chacune disposée entre deux barres métalliques 17.

Chaque enceinte d'élevage 5 présente un fond inférieur 23, sensiblement plat.

Elle présente de préférence un fond supérieur sensiblement plat 25, parallèle et opposé au fond inférieur 23.

Les fonds inférieur et supérieur 23, 25 présentent entre eux un écartement déterminé. Cet écartement est pris suivant une direction sensiblement perpendiculaire aux deux fonds.

Les fonds inférieur et supérieur 23, 25 présentent également chacun une longueur et une largeur supérieures à trois fois ledit écartement. La longueur est prise suivant une direction contenue dans le plan dans lequel s'inscrit le fond supérieur ou inférieur. La largeur est prise suivant une direction contenue dans ledit plan et perpendiculaire à la longueur.

De préférence, la longueur et la largeur sont supérieures à cinq fois l'écartement, encore de préférence supérieure à dix fois l'écartement.

Ainsi, l'enceinte d'élevage a une forme générale plate, et a une grande surface au regard de son épaisseur. Elle a ainsi la forme générale d'une poche utilisée typiquement pour l'élevage des huîtres.

Par exemple, l'enceinte d'élevage présente une longueur de l'ordre de 1 mètre, une largeur de l'ordre de 500 mm, ainsi qu'une hauteur de l'ordre 50 mm.

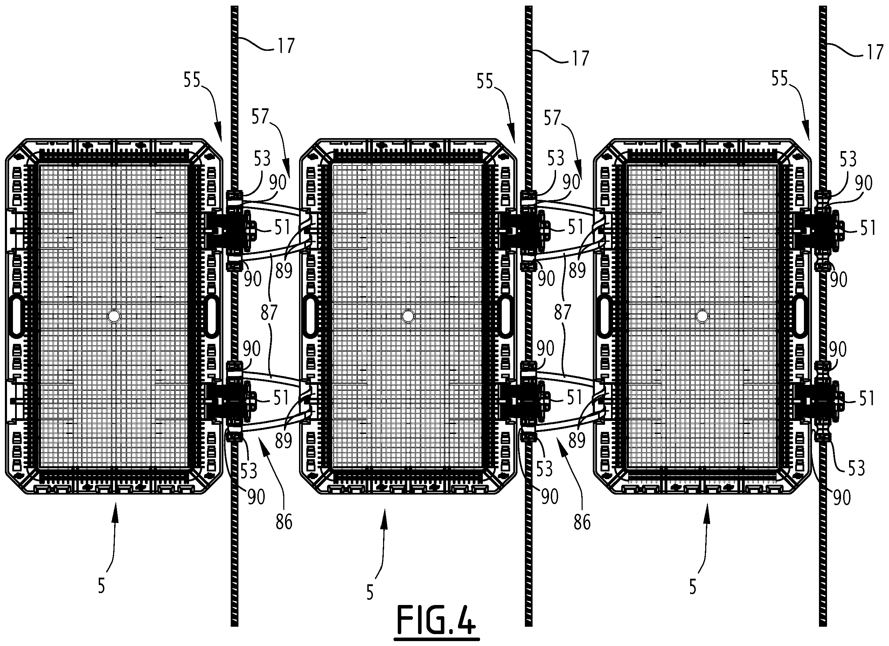

Comme visible sur les figures 4 à 6, l'enceinte d'élevage comprend de préférence deux demi-enceintes 27, l'une définissant le fond inférieur 23 et l'autre le fond supérieur 25.

Les deux demi-enceintes délimitent ensemble le volume 7 de réception des animaux d'aquaculture.

Elles sont fixées de manière amovible l'une à l'autre, par des moyens qui seront décrits plus loin.

Avantageusement, les deux demi-enceintes 27 sont identiques l'une à l'autre.

Elles sont de préférence réalisées en une matière plastique, par exemple en polypropylène.

Elles sont typiquement obtenues par injection de la matière plastique. Le fait que les deux demi-enceintes soient identiques l'une à l'autre permet donc de fabriquer les deux demi-enceintes avec le même moule, et permet donc une fabrication particulièrement économique.

Les demi-enceintes 27 ont une forme générale concave. Les concavités des deux demi-enceintes sont tournées l'une vers l'autre quand elles sont fixées l'une à l'autre pour constituer l'enceinte d'élevage.

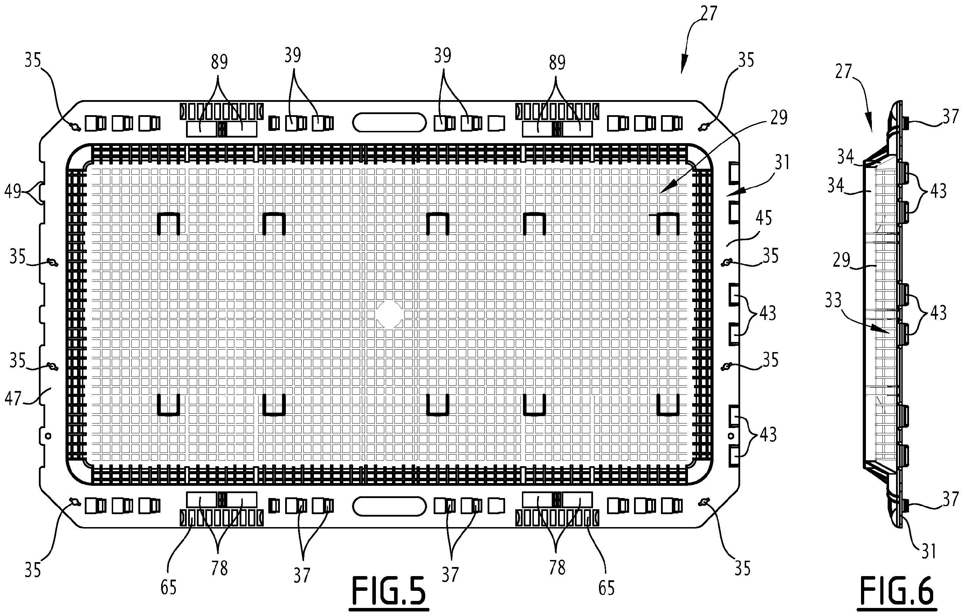

Chaque demi-enceinte 27 comprend une partie sensiblement plane 29 définissant le fond supérieur ou le fond inférieur suivant le cas, un bord plat 31 annulaire entourant la partie plane 29, et une paroi à contour fermé 33 raccordant la partie plane 29 au bord plat 31 (figures 5 et 6). La paroi à contour fermé 33 raccorde un bord extérieur de la partie plane 29 à un bord intérieur du bord plat 31. En d'autres termes, le bord plat 31 forme une collerette, s'étendant vers l'extérieur à partir de la paroi 33.

Le bord plat 31 s'inscrit dans un plan parallèle à la partie plane 29, définissant le plan de contact entre les deux demi-enceintes quand celles-ci sont assemblées pour constituer l'enceinte d'élevage.

La partie plane 29 et la paroi latérale 33 sont percées par de multiples ouvertures non référencées, suffisamment petites pour que les animaux d'aquaculture ne puissent pas s'échapper hors de l'enceinte d'élevage, mais suffisamment grandes pour permettre une circulation de l'eau entre l'intérieur et l'extérieur de l'enceinte d'élevage.

La partie plane 31 et la paroi latérale 33 sont renforcées par des nervures 34.

Avantageusement, les deux demi-enceintes 27 sont emboîtables l'une dans l'autre. Ceci permet d'empiler un grand nombre de demi-enceintes et de les stocker dans un volume réduit.

Pour ce faire, la paroi latérale 33 est évasée, et diverge à partir la partie plane 29 vers le bord plat 31.

Dans l'exemple représenté, la partie plane 29 est rectangulaire, et le bord plat 31 est délimité par un bord externe rectangulaire et par un bord interne également rectangulaire.

En variante, la partie plane 29 et le bord plat 31 ont toute forme adaptée : carrée, circulaire, ovale etc.

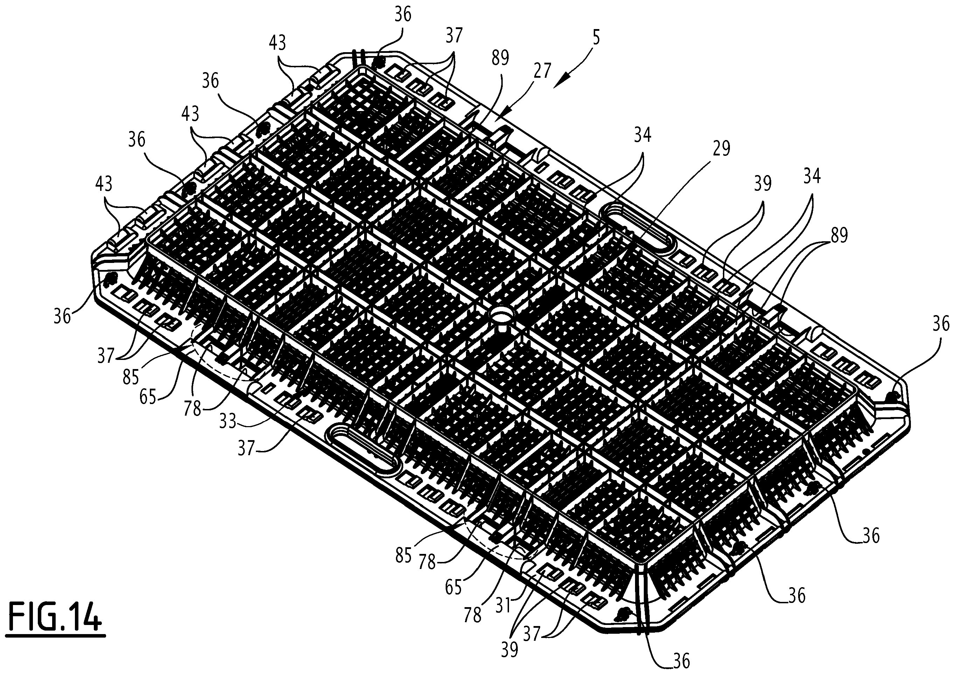

De préférence, les deux demi-enceintes 27 sont fixées l'une à l'autre par des organes de blocage, typiquement des goupilles 36 représentées sur la figure 14. Pour ce faire, le bord plat 31 présente des fentes 35 réparties au moins de deux côtés opposés de la partie plane 29. Les fentes 35 sont prévues pour recevoir les goupilles. Pour constituer l'enceinte d'élevage 5, les deux demi-enceintes 27 sont placées avec leur bord respectif 31 l'un contre l'autre. Les fentes 35 des deux demi-enceintes sont alors en coïncidence et il est possible d'y engager les organes de blocage.

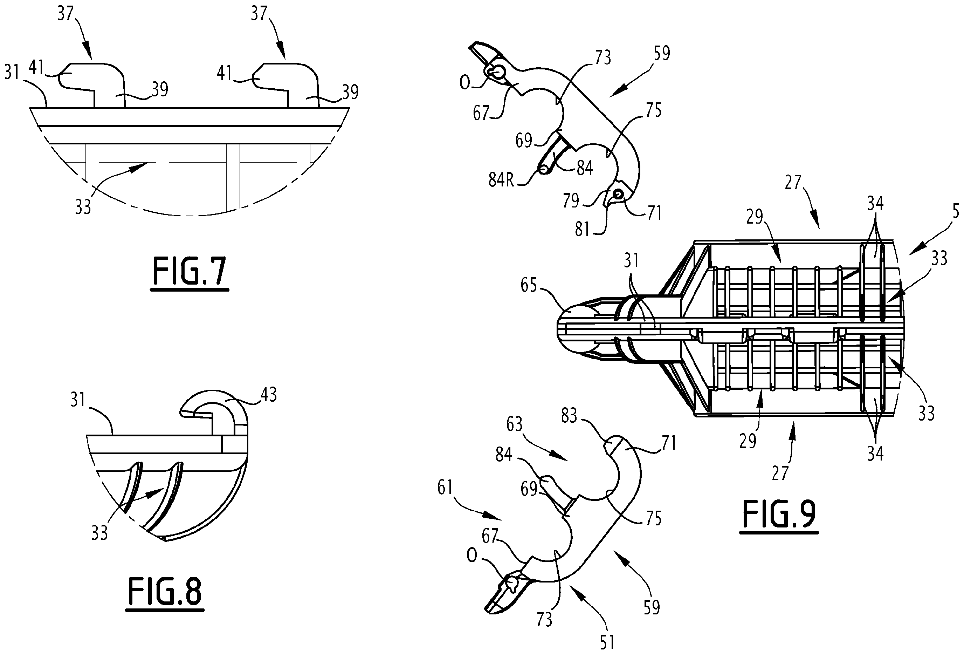

De manière à renforcer la fixation des deux demi-enceintes 27 l'une à l'autre, chaque demi-enceinte comporte des crochets 37 (figure 7) et des orifices 39 de réception des crochets de l'autre demi-enceinte (figure 5).

Les orifices 39 sont découpés dans le bord plat 31. Ils sont répartis le long d'au moins deux côtés opposés de la partie plane 29, par exemple les côtés qui ne portent par les fentes 35. Les crochets 37 sont portés par le bord plat 31 et font saillie à l'opposé de la partie plane 29 par rapport au bord plat 31.

Comme visible sur la figure 7, ils ont une forme générale en L, avec un tronçon 39 d'orientation sensiblement perpendiculaire au bord plat 31, prolongé par un tronçon terminal 41 s'étendant suivant une direction sensiblement parallèlement au bord plat 31.

Les tronçons terminaux 41 de toutes les pattes 37 pointent dans la même direction.

Les crochets 37 de chaque demi-enceinte sont prévus pour être engagés dans les orifices 39 de l'autre demi-enceinte selon un mouvement sensiblement perpendiculaire aux parties planes 29 des deux demi-enceintes. Ils sont ensuite mis en prise autour des bords desdits orifices 39 par un mouvement de translation de l'une des demi-enceintes par rapport à l'autre demi-enceinte suivant une direction longitudinale.

A l'issue de ce mouvement, le bord plat 31 de chaque demi-enceinte 27 est pincé entre les tronçons terminaux 41 et le bord plat 31 de l'autre demi-enceinte 27. Les crochets 37 ne peuvent plus être dégagés des orifices 39 par un mouvement perpendiculaire aux parties planes 29 des demi-enceintes.

A l'issue de ce mouvement de translation, les fentes 35 des deux demi-enceintes sont en coïncidence les unes avec les autres. Les organes de blocage peuvent alors être insérés dans ces fentes et bloquer ainsi toute possibilité de translation des deux demi-enceintes, au moins selon la direction longitudinale, et typiquement selon toutes les directions, celles-ci étant alors solidement solidarisées par les crochets.

De manière à renforcer encore la liaison entre les deux demi-enceintes, des crochets supplémentaires 43 sont prévus sur un segment 45 du bord plat s'étendant transversalement (figures 5 et 8). Ces crochets supplémentaires 43 ont une forme générale sensiblement identique à celle des crochets 37. Les crochets supplémentaires 43 sont portés par le bord externe de la collerette plate 31. Leurs tronçons terminaux pointent longitudinalement, suivant la même direction que les tronçons terminaux 41 des crochets 37. Le segment transversal 47 du bord plat 31, situé à l'opposé du segment transversal 45, présente sur son bord externe des encoches 49. Quand les deux demi-enceintes 27 sont assemblées l'une à l'autre comme décrit plus haut, à savoir un premier mouvement perpendiculaire aux parties planes 29 et un second mouvement longitudinal, les pattes supplémentaires 43 de chaque demi-enceinte viennent s'engager dans les encoches 49 de l'autre demi-enceinte et s'adapter autour du segment transversal 47 de l'autre demi-enceinte. Le bord plat 31 de chaque demi-enceinte 27 est ainsi pincé entre les pattes supplémentaires 43 et le bord plat 31 de l'autre demi-enceinte 27.

Ainsi, les deux demi-enceintes 27 sont liées l'une à l'autre par une liaison particulièrement résistante. La rigidité de l'enceinte d'élevage est augmentée. Ceci est dû notamment à l'existence d'un grand nombre de points de fixation des deux demi-enceintes 27 l'une à l'autre, répartis autour des fonds supérieur et inférieur.

La liaison 13 autorise une rotation de chaque enceinte d'élevage 5 autour d'un premier axe de rotation R1 sensiblement horizontal, et une rotation du premier axe de rotation R1 par rapport au châssis 3 autour d'un second axe de rotation R2 sensiblement parallèle au premier axe de rotation R1 (figures 1 à 3).

Plus précisément, la liaison 13 comporte avantageusement au moins un organe de liaison 51 de type bielle, monté pivotant sur l'enceinte d'élevage 5 autour du premier axe de rotation R1 et monté pivotant sur le châssis 3 autour du second axe de rotation R2.

Comme visible sur la figure 4, la liaison 13 comporte typiquement deux organes de liaison de type bielle 51 pour chaque enceinte d'élevage, chaque organe de liaison 51 liant l'enceinte d'élevage 5 au châssis. Les premiers axes de rotation R1 des deux organes de liaison d'une même enceinte d'élevage sont alignés l'un avec l'autre. De même, les seconds axes de rotation R2 des deux organes de liaison 51 de la même enceinte 5 sont alignés l'un avec l'autre.

L'enceinte d'élevage 5 présente un bord proximal 55 et un bord distal 57 opposés l'un à l'autre, tournés vers les deux barres métalliques encadrant l'enceinte d'élevage 5.

Dans l'exemple représenté, le bord proximal et le bord distal sont longitudinaux.

Ces bords 55, 57 sont constitués par des segments des collerettes plates 31 des deux demi-enceintes plaqués l'un contre l'autre.

La liaison 13 lie le bord proximal 55 au châssis 3.

Plus précisément, chaque organe de liaison 51 lie le bord proximal 55 à la barre métallique 17 jouxtant ledit bord proximal.

Comme visible sur les figures 4, 12 et 13, la liaison 13 comporte, pour chaque organe de liaison 51, un manchon 53 fixé à la barre métallique 17 jouxtant le bord proximal 55 de l'enceinte d'élevage 5. L'organe de liaison 51 est monté pivotant autour du manchon 53. La barre métallique 17 constitue ainsi le second axe de rotation R2.

Ce manchon 53 entoure complètement la barre métallique 17. Par exemple, il est constitué de deux demi-coques de forme générale semi-cylindrique, placées de part et d'autre de la barre métallique 17. Les deux demi-coques sont rigidement fixées l'une à l'autre par tout moyen adapté, par exemple par des goupilles. Le manchon 53 est typiquement en polyoléfine. On réduit ainsi l'usure de l'organe de liaison 51, qui n'est pas en contact direct avec la barre métallique.

Comme visible sur les figures 9 à 13, chaque organe de liaison 51 comporte avantageusement deux demi-pinces 59 indépendantes l'une de l'autre. Les deux demi-pinces 59 définissent ensemble deux paliers 61, 63, sensiblement parallèles l'un à l'autre. Le palier 61 est destiné à recevoir intérieurement le manchon 53. Le palier 63 est destiné à recevoir intérieurement un cylindre 65 formé sur le bord proximal 55 de l'enceinte d'élevage.

Chaque demi-pince 59 présente donc la forme générale d'un W, avec trois massifs 67, 69 et 71 délimitant entre eux deux creux 73 et 75. Les creux 73 et 75 ont des formes semi-cylindriques. Quand les deux demi-pinces sont assemblées l'une à l'autre, les creux 73 des deux demi-pinces constituent le palier 61, et les creux 75 des demi-pinces constituent le palier 63.

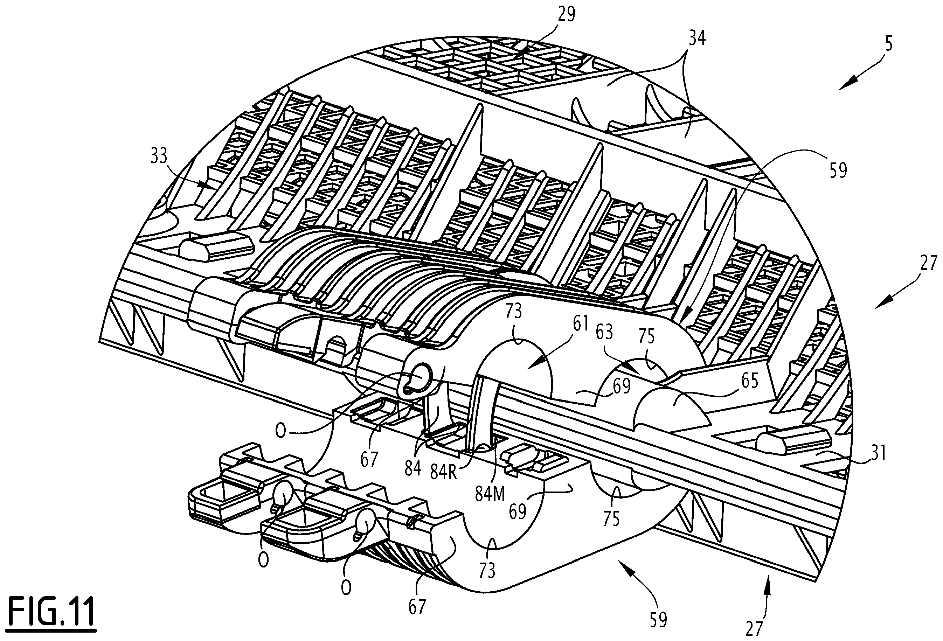

Les deux demi-pinces 59 sont susceptibles d'être montées sur l'enceinte d'élevage 5 dans une position ouverte stable, représentée sur la figure 11, dans laquelle les demi-pinces 59 sont liées l'une à l'autre par une liaison pivot 77.

L'axe de rotation du pivot est sensiblement parallèle au premier axe de rotation.

Pour permettre la mise en place des deux demi-pinces, le bord proximal 55 du casier présente, le long du cylindre 65 deux orifices 78. Ces orifices sont décalés vers l'intérieur de l'enceinte par rapport au cylindre 65.

La liaison pivot 77 comporte deux plaques 79, parallèles l'une à l'autre, formées sur le massif 71 de l'une des demi-pinces (figures 5 et 9). Chaque plaque 79 porte des tourillons 81 sur ses deux faces opposées. Les quatre tourillons 81 sont alignés.

Le massif 71 de l'autre demi-pince forme deux paires de flasques 83, chaque paire de flasques étant prévue pour recevoir entre ses deux flasques l'une des plaques 79. Des berceaux de réception des tourillons 81 (non représentés) sont creusés dans les faces en vis-à-vis des deux flasques d'une même paire.

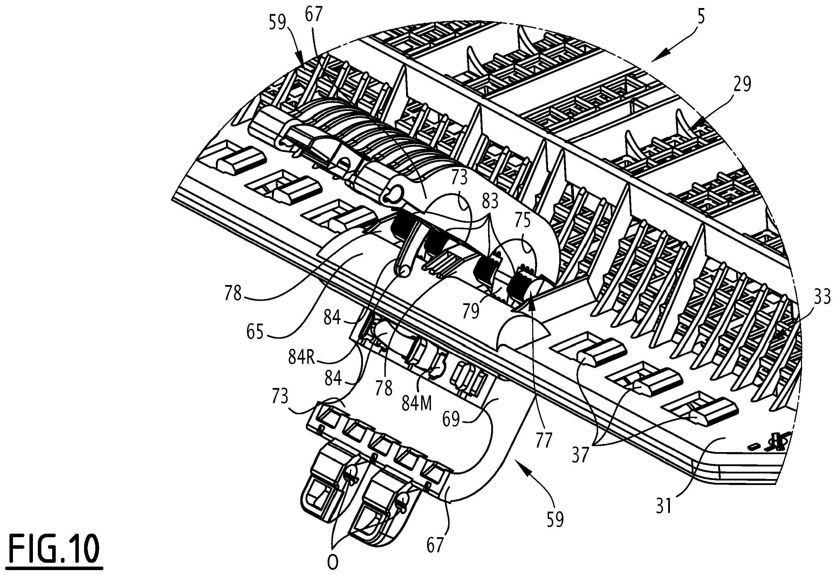

Les demi-pinces 59 sont d'abord montées sur l'enceinte 5 comme illustré sur la figure 10.

On voit que les plaques 79 sont chacune engagée dans l'un des orifices 78. Elles sont engagées entre les flasques 83 de l'autre demi-pince 59. Les demi-pinces forment un angle d'environ 90° l'une avec l'autre. La rotation des deux demi-pinces l'une par rapport à l'autre dans le sens d'une ouverture de la pince est bloquée par des reliefs formés sur les demi-pinces 59. En revanche, les deux demi-pinces 59 sont libres de pivoter l'une par rapport à l'autre autour de la liaison pivot 77 dans le sens d'une fermeture. Il est à noter que les berceaux formés dans les flasques 83 sont prévus pour que l'engagement des tourillons 81 soit facile, mais que l'extraction des tourillons 81 en dehors des berceaux nécessite un effort significatif, de manière à éviter que les deux demi-pinces se séparent l'une de l'autre de manière involontaire.

A partir de la position de la figure 10, les demi-pinces 59 peuvent pivoter autour de la liaison pivot 77 jusqu'à la position ouverte stable, représentée sur la figure 11. Chaque demi-pince 59 comporte un bras 84, portant à son extrémité un relief 84R. En position ouverte, le relief 84R de chaque demi-pince est calé de manière réversible dans un logement 84M de l'autre demi-pince. Ceci permet de maintenir les demi-pinces 59 dans la position ouverte, sans empêcher que le mouvement de rotation des demi-pinces l'une vers l'autre soit prolongé.

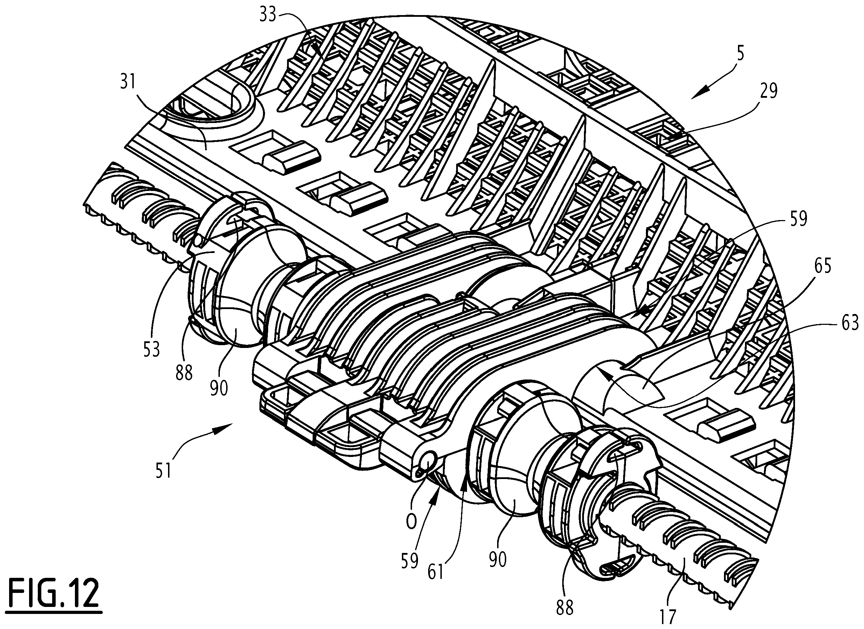

Ainsi, à partir de la position ouverte stable (figure 11), les deux demi-pinces peuvent être refermées autour du châssis 3 par pivotement autour de la liaison pivot 77 (figure 12). Les bras 84 coulissent dans les logements 84M.

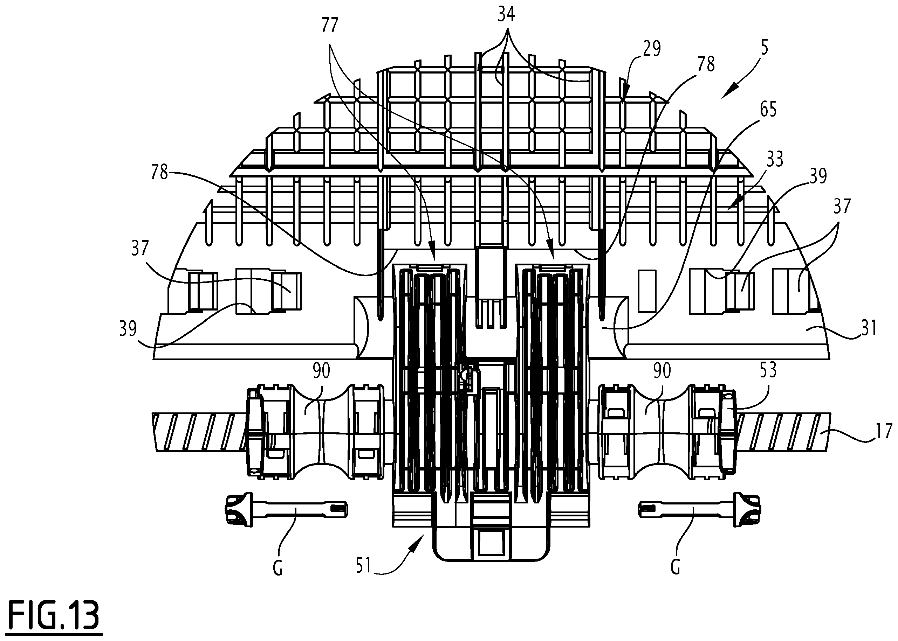

Les creux 75 se mettent alors en place autour du cylindre 65, et les creux 73 autour du manchon 53. Dans cette position, les massifs intermédiaires 69 des deux demi-pinces 59 sont en appui l'un contre l'autre, et les massifs 67 des deux demi-pinces 59 sont également en appui l'un contre l'autre. Les deux demi-pinces 59 sont verrouillées dans cette position par des goupilles G représentées sur la figure 13, engagées dans des orifices O alignés des deux demi-pinces 59. On comprend donc que le montage de l'organe de liaison 51 est particulièrement simple. Il permet une mise en place aisée des enceintes d'élevage 5 sur le châssis 3.

L'enceinte d'élevage 5 comprend de préférence au moins une zone de butée 85 (figure 14), coopérant avec l'organe de liaison 51 de manière à limiter le débattement en rotation de l'enceinte d'élevage 5 par rapport à l'organe de liaison 51 autour du premier axe de rotation R1.

Typiquement, l'enceinte d'élevage 5 comporte deux zones de butée 85, limitant le débattement en rotation de l'enceinte d'élevage 5 par rapport à l'organe de liaison 51 dans les deux sens de rotation opposés.

Ces zones 85 sont renforcées du fait qu'elles comportent un plus grand nombre de nervures 34 que les autres zones de l'enceinte 5, de manière à rigidifier la structure de l'enceinte d'élevage 5 au niveau desdites zones 85.

Par exemple, ces zones 85 sont les zones de la paroi périphérique 33 situées en regard de chaque organe de liaison. La zone 85 ménagée sur la paroi périphérique 33 d'un des demi-casiers limite la rotation dans un sens, et celle formée sur la paroi 33 de l'autre demi-casier limite la rotation dans l'autre sens. Ces butées assurent ainsi un effet de choc en fin de course favorisant le décollement et le déplacement des animaux d'aquaculture sur le plateau.

Par ailleurs, le dispositif d'élevage 1 comporte avantageusement un dispositif limiteur 86 limitant le débattement de l'enceinte d'élevage 5 par rapport au châssis 3 suivant la direction verticale (figure 4).

Le dispositif limiteur 86 comprend au moins un lien souple 87 qui lie le châssis 3 à l'enceinte d'élevage 5.

De préférence, le ou chaque lien souple 87 est élastique. Ceci permet d'amortir le mouvement de l'enceinte d'élevage dans le sens vertical.

Typiquement, chaque enceinte d'élevage 5 est liée par deux liens souples 87 au châssis 3.

De préférence, chaque lien souple 87 lie le bord distal 57 de l'enceinte d'élevage 5 au châssis 3. Plus précisément, le lien 87 lie le bord distal 57 à la barre métallique 17 située à l'opposé des organes de liaison 51. Ainsi, l'enceinte d'élevage est liée d'un côté par les organes de liaison 51 à l'une des barres métalliques 17, et de l'autre côté par les liens souples 87 à l'autre barre métallique 17.

Comme visible notamment sur les figures 4 et 5, le bord distal 57 présente des orifices 89 permettant le passage et la fixation d'une extrémité du lien souple 87.

Typiquement, les extrémités du lien souple 87 sont fixées au manchon 53 sur lequel est articulée l'enceinte d'élevage 5 voisine. Comme illustré sur la figure 4, les extrémités du lien souple 87 sont enroulées autour du manchon, dans des gorges 90 formées par le manchon 53.

Les manchons 53 peuvent comporter en outre des encoches 88, visibles sur la figure 12, permettant d'accrocher le lien souple au manchon.

Il est à noter que les orifices 89 sont identiques et positionnés de la même façon que les orifices 78.

Plus généralement, on notera que chaque demi-casier est symétrique par rapport à un plan médian longitudinal, perpendiculaire à la partie plane 29.

Il est ainsi possible de monter les enceintes d'élevage dans n'importe quel sens.

Dans le premier mode de réalisation, chaque enceinte d'élevage 5 est équipée de son propre flotteur 11, qui constitue le dispositif flotteur 10.

Le dispositif flotteur 10 est lié par une liaison souple 95 à l'enceinte d'élevage 5.

La liaison souple 95 est de tout type adapté. La liaison souple 95 comporte par exemple un ou plusieurs câbles, raccordant chacun le flotteur à l'enceinte. En variante, elle comporte des filins, des cordes, des chaînes, ou tout autre type de lien souple.

Typiquement, la liaison souple 95 raccorde le dispositif flotteur 10 au bord distal 57 de l'enceinte d'élevage supérieure, ou à une zone de l'enceinte d'élevage 5 située à proximité du bord distal 57.

La longueur de la liaison souple 95 est choisie de telle sorte que le dispositif flotteur 10, quand la liaison souple est tendue, soit dans la zone de marnage, c'est-à-dire à un niveau compris entre le niveau de l'eau à marée basse (MB sur la figure 1) et le niveau de l'eau à marée haute (MH sur la figure 1). En d'autres termes, la longueur de la liaison souple est choisie pour que, à au moins un moment au cours du cycle des marées, le dispositif flotteur 10 flotte à la surface de l'eau avec la liaison souple 95 tendue, de telle sorte que les déplacements de l'eau dus à la marée et/ou aux vagues soient transmis par le dispositif flotteur 10 et la liaison souple 95 à l'enceinte d'élevage supérieure.

Le dispositif flotteur 10 est dimensionné pour faire flotter l'enceinte contenant les animaux d'aquaculture jusqu'à la fin de l'élevage, c'est-à-dire quand ces animaux ont leur poids maximum. Le dispositif flotteur 10 peut aussi être adapté au fur et à mesure de l'élevage, par exemple en ajoutant de la flottabilité à mesure que la masse des animaux d'aquaculture dans les enceintes augmente.

Le fonctionnement du dispositif d'élevage va maintenant être détaillé, plus particulièrement en référence aux figures 1 à 3.

Le dispositif d'élevage est conçu pour transmettre les mouvements des vagues aux enceintes d'élevage, et faire dévaler les animaux d'aquaculture sur une distance importante en les faisant rouler sur la surface intérieure de l'enceinte et les uns contre les autres, notamment au moment des marées descendante et montante.

Sur la figure 1, le dispositif d'élevage 1 est représenté quand le niveau de l'eau est tel que les dispositifs flotteurs 10 flottent à la surface de l'eau avec les liaisons souples 95 tendues.

Le fond intérieur 23 de chaque enceinte 5 est sensiblement horizontal.

Les deux axes de rotation R1, R2 sont sensiblement dans un plan horizontal.

Les liens souples 87 ne sont pas tendus.

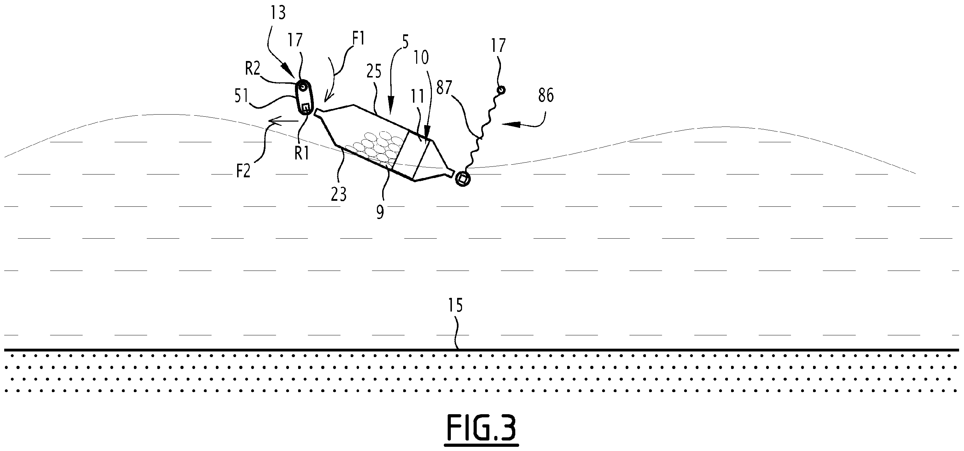

Quand le dispositif flotteur 10 se trouve dans un creux entre deux vagues, comme illustré sur la figure 3, le niveau vertical du dispositif flotteur 10 s'abaisse.

L'enceinte d'élevage 5 adopte une position inclinée, le bord proximal 55 lié par la liaison 13 au châssis 3 restant plus haut et le bord distal 57 étant plus bas. La liaison 13 autorise le pivotement de l'enceinte d'élevage 5 autour des deux axes de rotation R1 et R2.

Du fait de l'inclinaison, notamment du fait que le fond inférieur 23 est incliné par rapport à l'horizontale, les animaux d'élevage 9 vont rouler sur le fond intérieur 23 et vont rouler les uns contre les autres en s'accumulant vers le bord distal 57 de l'enceinte d'élevage.

Du fait que la liaison 13 possède deux degrés de liberté en rotation, le mouvement de pivotement vers le bas de l'enceinte d'élevage 5 (flèche F1 de la figure 3) s'accompagne d'un mouvement d'orientation générale horizontale de l'enceinte 5, matérialisé par la flèche F2 de la figure 3. Ce mouvement général horizontal crée un effort de cisaillement au niveau du contact entre les animaux d'aquaculture et l'enceinte d'élevage, qui amplifie la circulation des animaux d'élevage et leur permet de dévaler et de rouler même avec des inclinaisons faibles. Cet effort de cisaillement, quand il est répété, permet éventuellement de décoller les animaux d'élevage qui seraient accrochés à l'enceinte d'élevage.

Ainsi, la liaison 13 permet de transformer le mouvement vertical de l'eau, dû aux vagues, en un mouvement d'agitation à la fois vertical et horizontal qui, associé à l'inclinaison de l'enceinte d'élevage 5, permet aux animaux d'aquaculture de dévaler sur le maillage plan de l'enceinte en roulant sur ce maillage les uns contre les autres.

Par ailleurs, les organes de liaison 51 en fin de course viennent buter contre les zones de butée 85 de l'enceinte d'élevage, ce qui renforce encore l'effet de cisaillement. Ceci favorise le décollement des animaux d'élevage, notamment des huîtres qui auraient pu se recoller par nacration entre deux périodes d'agitation.

Le dispositif limiteur 86 permet de limiter l'amplitude verticale du mouvement, ce qui permet à l'éleveur d'adapter le système aux conditions hydrauliques régnant dans la zone d'élevage et à la saisonnalité de son élevage.

Il est à noter que l'enceinte d'élevage 5 est animée de mouvements inverses à ceux matérialisés par les flèches F1 et F2 quand l'enceinte revient de sa position basse illustrée sur la figure 3 vers la position intermédiaire illustrée sur la figure 1.

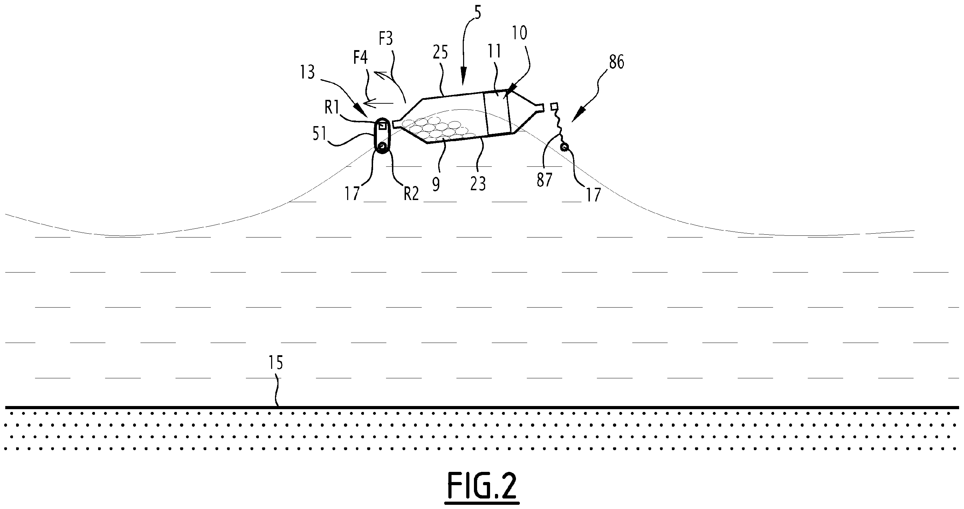

Comme visible sur la figure 2, quand le dispositif flotteur 10 se situe en haut d'une vague, l'enceinte d'élevage 5 adopte une inclinaison opposée à celle illustrée sur la figure 3. Le bord distal 57 se trouve plus haut que la barre métallique 17, de telle sorte que les animaux d'aquaculture 9 dévalent le fond inférieur 23 vers le bord proximal 55. L'enceinte d'élevage subit un mouvement de pivotement par rapport à la barre métallique 17, matérialisé par la flèche F3 de la figure 2. Ce pivotement est effectué vers le haut. Par rapport à la position de la figure 1, l'enceinte d'élevage 5 subit également un déplacement suivant une direction générale horizontale, matérialisé par la flèche F4 de la figure 2. De nouveau, il se crée un effort de cisaillement entre les animaux d'aquaculture et l'enceinte d'élevage, qui favorise le déplacement et le roulement des animaux d'élevage 9 au sein de l'enceinte d'élevage 5.

Les organes de liaison 51 en fin de course viennent buter contre les zones de butée 85 prévues à cet effet sur l'enceinte d'élevage 5. Le dispositif limiteur 86 limite la course verticale vers le haut de l'enceinte d'élevage 5 par rapport au châssis 3.

L'enceinte d'élevage 5 est animée de mouvements inverses de ceux représentés par les flèches F3 et F4 quand elle revient de sa position haute extrême matérialisée sur la figure 2 à la position intermédiaire représentée sur la figure 1.

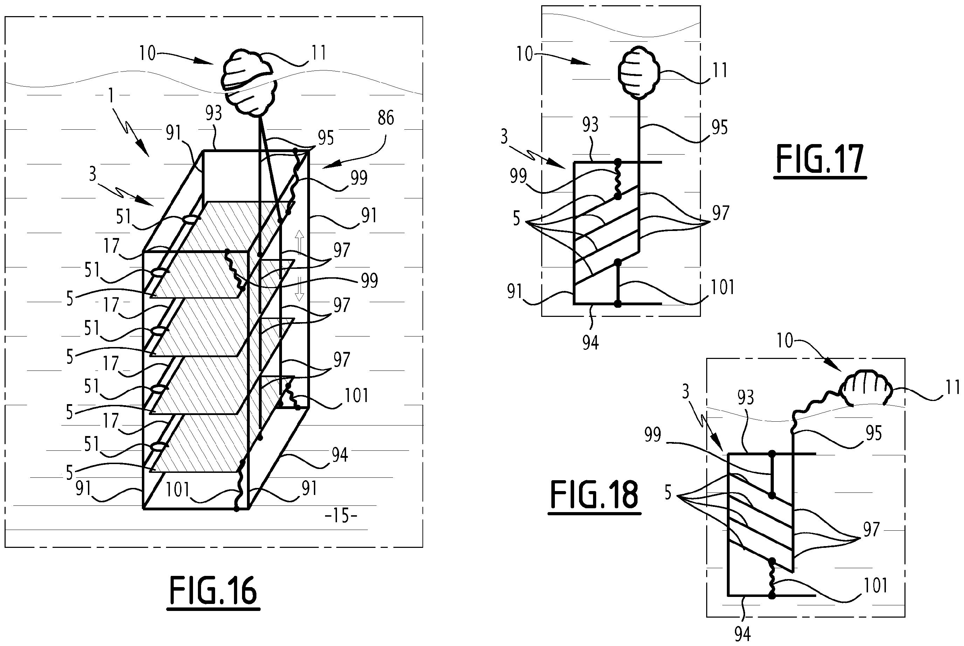

Quand la marée est haute, comme illustré sur la figure 17 pour un autre mode de réalisation, le dispositif flotteur 10 est entièrement immergé, et se trouve à distance sous le niveau de l'eau. La liaison souple 95 est tendue. L'enceinte d'élevage 5 occupe sa position extrême haute. Cette position est définie par le dispositif limiteur 86.

Dans l'exemple de réalisation décrit plus haut, cette position est définie par la longueur du ou des liens souples 87, qui sont tendus eux aussi.

Quand la marée est basse, comme illustré sur la figure 18 pour un autre mode de réalisation, l'enceinte d'élevage 5 est dans sa position extrême basse, définie par le dispositif limiteur 86.

Dans l'exemple de réalisation décrit plus haut, cette position est définie par la longueur du ou des liens souples 87. Le dispositif flotteur 10 flotte à la surface de l'eau. La liaison souple 95 n'est pas tendue.

Le niveau d'implantation du dispositif flotteur 10 par rapport à la hauteur du marnage, c'est-à-dire à la hauteur de l'eau à marée haute et à la hauteur de l'eau à marée basse, permet de choisir les conditions de fonctionnement du système.

En effet, le marnage est caractérisé par deux paramètres : son amplitude, variable d'un jour à l'autre (par exemple en France les forts marnages alternent avec les faibles marnages sur une périodicité de 15 jours) et la vitesse de montée et de descente de l'eau qui par exemple suit la règle des douzièmes, ce qui signifie qu'au début ou à la fin de la marée descendante ou montante la vitesse de montée et de descente est trois fois plus lente qu'à mi-marée. En conséquence, selon l'implantation altimétrique du dispositif flotteur par rapport au marnage, on pourra soit obtenir dans la tranche supérieure des marnages de faible amplitude une agitation quotidienne sur une longue durée, soit obtenir dans la tranche inférieure des marnages de forte amplitude une agitation peu à très peu fréquente sur une longue durée, soit obtenir dans l'espace médiant du marnage une agitation plus ou moins fréquente et de plus courte durée.

Il est à noter que le dispositif limiteur 86 permet également de régler l'amplitude et la durée d'agitation des animaux d'aquaculture, afin d'en réguler l'effet recherché sur les animaux en élevage. En effet, les enceintes d'élevage 5 ne sont agitées que pendant une période limitée de la marée. Elles sont agitées entre le moment où la hauteur de la crête des vagues est suffisante pour que les enceintes d'élevage soient soulevées de leurs positions extrêmes basses (représentée sur la figure 3), et le moment où la hauteur du creux des vagues est telle que les enceintes d'élevage sont bloquées en position extrême haute (représentée sur la figure 2). Ces positions extrêmes haute et basse sont déterminées par le dispositif limiteur 86. Plus l'amplitude verticale du mouvement des enceintes d'élevage est grande, plus la durée d'agitation est grande et plus l'agitation est violente.

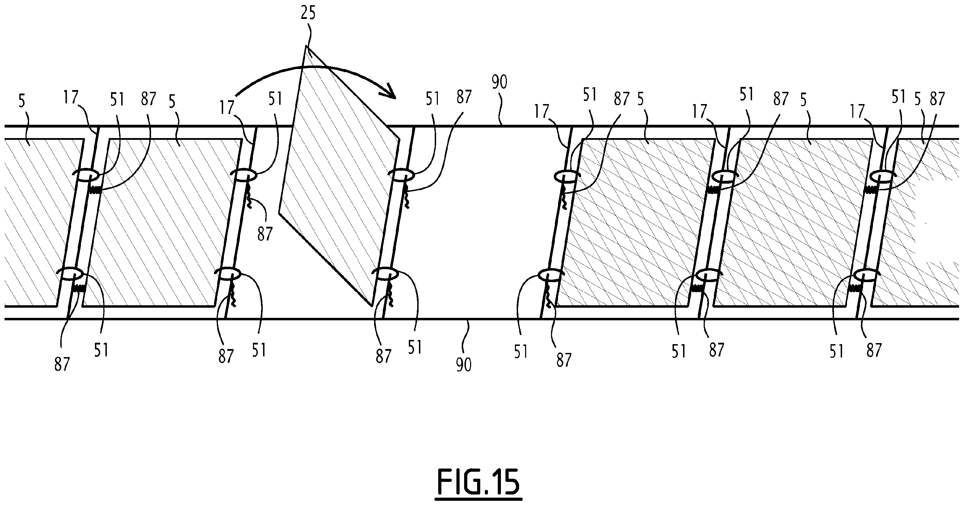

Un aspect avantageux du premier mode de réalisation est représenté sur la figure 15. Comme décrit plus haut, le châssis 3 comporte une pluralité de barres métalliques 17, parallèles les unes aux autres et régulièrement écartées les unes des autres. Les barres métalliques 17 sont par exemple fixées à des traverses métalliques 90. Chaque enceinte d'élevage est disposée entre deux barres métalliques 17. Son bord proximal 55 est lié par la liaison 13 à l'une des barres métalliques 17, et son bord distal 57 est lié par un ou plusieurs liens souples 87 à l'autre barre métallique 17. L'enceinte d'élevage 5 voisine est montée de la même façon. Plus précisément, le bord distal 55 de l'enceinte d'élevage 5 voisine est lié par la liaison 13 à la barre métallique 17 à laquelle la première enceinte d'élevage est liée par le ou les liens souples 87. Ainsi, chaque barre métallique 17 est liée d'un côté par une liaison 13 à une enceinte d'élevage 5, et de l'autre côté par des liens souples 87 à une autre enceinte d'élevage.

On forme ainsi une ligne continue d'enceintes d'élevage 5. Les enceintes d'élevage 5 peuvent être retournées très aisément pour lutter contre l'encrassement. En effet, il est connu que des algues se développent plus facilement sur les faces des enceintes d'élevage qui sont tournées vers le haut, c'est-à-dire exposées au soleil. Par ailleurs, des ascidies se développent sur la face de l'enceinte d'élevage qui est à l'ombre, c'est-à-dire tournée vers le bas.

Pour retourner les enceintes d'élevage du dispositif, il suffit de délier les liens 87 liant chaque enceinte d'élevage à la barre métallique 17 correspondante. On peut ensuite faire pivoter l'enceinte d'élevage 5 autour de l'autre barre métallique, à laquelle elle est liée par la liaison 13. Puis, le bord distal de l'enceinte est lié à une nouvelle barre métallique 17, par les liens élastiques qui sont restés en place.

Un second mode de réalisation selon l'invention va maintenant être décrit, en référence aux figures 16 à 19. Seuls les points par lesquels le second mode de réalisation se différencie du premier seront détaillés ci-dessous.

Dans le second mode de réalisation, toutes les enceintes d'élevage 5 du dispositif d'élevage 1 sont liées à un même dispositif flotteur 10.

Les enceintes d'élevage 5 sont superposées les unes au-dessus des autres.

Elles sont liées chacune au châssis 3 par leur liaison 13.

Avantageusement, le châssis 3 comprend plusieurs barres métalliques 17 parallèles les unes aux autres, espacées les unes des autres au moins verticalement.

Par exemple, le châssis 3 comporte une structure parallélépipédique. Cette structure comporte quatre poteaux verticaux 91, ces poteaux étant de préférence solidarisés les uns aux autres par un cadre supérieur 93 et par un cadre inférieur 94. Les barres métalliques 17 sont rigidement fixées par leur extrémité opposée à deux des poteaux 91, et sont superposées suivant la direction verticale. Les barres métalliques 17 sont ainsi disposées sur une grande face du parallélépipède.

Une enceinte d'élevage 5 est liée à chaque barre métallique 17.

Les barres métalliques 17 sont régulièrement espacées les unes des autres suivant la direction verticale.

Les enceintes d'élevage 5 sont placées à l'intérieur du châssis, et débattent entre les poteaux 91.

Selon un exemple de réalisation, le dispositif flotteur 10 comporte un unique flotteur 11. Le dispositif flotteur 10 est lié par une liaison souple 95 à l'enceinte d'élevage 5 supérieure, située le plus haut dans l'empilement d'enceintes d'élevage. Des liaisons intermédiaires 97, typiquement des câbles ou des filins, relient chaque enceinte d'élevage 5 à l'enceinte d'élevage située immédiatement au-dessus et/ou à l'enceinte d'élevage située immédiatement en-dessous dans l'empilement. En variante, ces liaisons intermédiaires sont des entretoises rigides, qui pivotent par exemple autour des axes situés sur le bord distal des enceinte d'élevage. Dans certains cas, une liaison rigide peut être un facteur de cohésion du mouvement favorisant une agitation égale de l'ensemble des enceintes d'élevage. En effet, une liaison souple pourrait, en cas d'agitation à haute fréquence (clapot), favoriser, consécutivement à l'inertie de l'ensemble des enceintes d'élevage, l'agitation des enceintes d'élevage supérieures avec pour conséquence une agitation trop importante des animaux d'élevage des enceintes supérieures versus une agitation insuffisante des animaux d'élevage des enceintes inférieures.

Typiquement, la liaison souple 95 raccorde le dispositif flotteur 10 au bord distal 57 de l'enceinte d'élevage supérieure. La ou les liaisons intermédiaires 97 raccordent entre eux les bords distaux des différentes enceintes d'élevage.

Le châssis 3 repose sur le fond 15. Il est par exemple monté sur un pieu fiché dans le fond 15.

La longueur de la liaison souple 95 est choisie de telle sorte que le dispositif flotteur 10, quand la liaison souple est tendue, soit dans la zone de marnage, c'est-à-dire à un niveau compris entre le niveau de l'eau à marée basse et le niveau de l'eau à marée haute. Les liaisons intermédiaires 97 sont choisies de longueurs telles que, quand l'enceinte 5 supérieure pivote vers le haut, elle entraine l'enceinte située immédiatement en-dessous d'elle, qui entraine elle-même l'enceinte immédiatement inférieure etc.

Typiquement, la longueur des liaisons intermédiaires 97 est choisie égale à l'écartement vertical entre les barres métalliques 17.

Dans l'exemple représenté, le dispositif flotteur 10 est lié à l'enceinte d'élevage supérieure par deux câbles. Chaque enceinte d'élevage est liée à l'enceinte immédiatement au-dessus et/ou l'enceinte immédiatement au-dessous par deux liaisons intermédiaires 97.

Par ailleurs, le dispositif limiteur 86 comprend au moins un lien souple 99 liant l'enceinte d'élevage 5 supérieure au châssis et limitant la course de ladite enceinte vers le bas. Dans l'exemple représenté, le dispositif limiteur 86 comprend deux liens souples 99 liant l'enceinte supérieure au châssis.

Par ailleurs, le dispositif limiteur 86 comprend au moins un lien souple 101 liant l'enceinte 5 inférieure, située en bas de l'empilement d'enceintes, au châssis et limitant la course de l'enceinte inférieure vers le haut. Dans l'exemple représenté, le dispositif limiteur 86 comprend deux liens souples 101 liant l'enceinte inférieure au châssis.

Il est à noter que les liens souples 101 pourraient ne pas être montés sur l'enceinte inférieure 101 mais être montés sur tout autre enceinte de l'empilement.

Le fonctionnement du dispositif d'élevage selon le second mode de réalisation va maintenant être décrit.

Quand la marée est haute, comme illustré sur la figure 17, le dispositif flotteur 10 est entièrement immergé, et se trouve à distance sous le niveau de l'eau. La liaison souple 95 est tendue. Les enceintes d'élevage 5 occupent leurs positions extrêmes hautes. Cette position est définie par le dispositif limiteur 86.

Dans l'exemple de réalisation décrit plus haut, cette position est définie par la longueur du ou des liens souples 101, qui sont tendus eux aussi. Le dispositif flotteur 10 sollicite l'enceinte d'élevage supérieure 5 vers le haut, cette sollicitation étant transmise par chaque enceinte d'élevage 5 à l'enceinte d'élevage immédiatement inférieure à travers les liaisons intermédiaires 97.

Quand la mer se trouve à un niveau intermédiaire entre la marée haute et la marée basse, fonction de la longueur de la liaison souple 95, on rencontre la situation illustrée sur la figure 16. Le dispositif flotteur 10 flotte à la surface de l'eau, la liaison souple 95 étant tendue. Le déplacement vertical de l'eau créé par les vagues entraine un déplacement vertical du dispositif flotteur 10. Quand le dispositif flotteur 10 se déplace vers le haut, il entraine par le biais de la liaison souple 95 l'enceinte d'élevage 5 supérieure, qui entraine elle-même vers le haut par le biais des liaisons intermédiaires 97 les enceintes situées plus bas.

Ce mouvement vertical vers le haut est limité, le cas échéant, par le dispositif limiteur 86. Dans l'exemple de réalisation décrit plus haut, le mouvement vers le haut est limité par les liens souples 101.

Quand le niveau de l'eau descend, le dispositif flotteur 10 est entrainé vers le bas. Ceci donne du mou à la liaison souple 95, et les enceintes 5 sont entraînées vers le bas sous l'effet de leur propre poids. Le mouvement vers le bas de l'enceinte supérieure 5 est limité le cas échéant par le dispositif limiteur 86. Dans l'exemple de réalisation décrit plus haut, le mouvement vers le bas est limité par le ou les liens souples 99. Le mouvement vers le bas de chaque enceinte d'élevage 5 par rapport à l'enceinte supérieure est limité par la longueur des liaisons intermédiaires 97.

Quand la marée est basse, le dispositif d'élevage est dans la situation illustrée par la figure 18. Les enceintes d'élevage 5 sont dans leur position extrême basse, définies par le dispositif limiteur 86.

Dans l'exemple de réalisation décrit plus haut, cette position est définie par la longueur du ou des liens souples 99 et par la longueur des différentes liaisons intermédiaires 97. Le dispositif flotteur 10 flotte à la surface de l'eau. La liaison souple 95 n'est pas tendue.

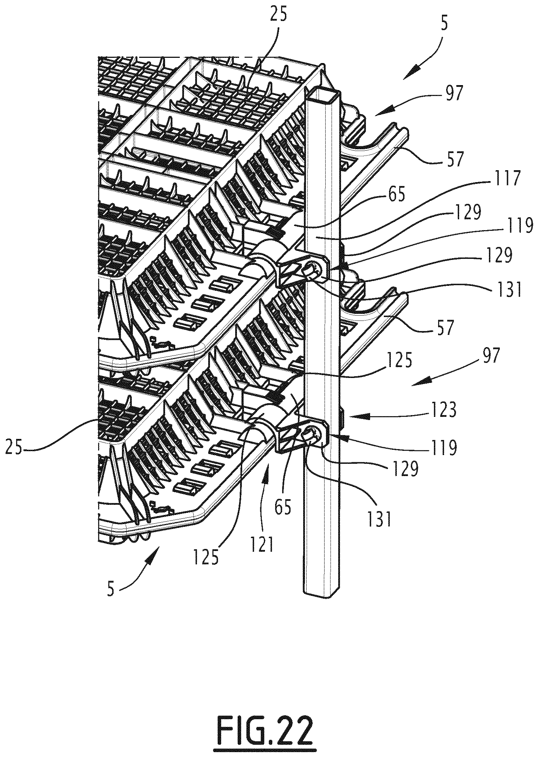

Selon une variante de réalisation représentée sur la figure 22, les enceintes d'élevage 5 sont liées les unes aux autres par des liaisons intermédiaires 97 comprenant un membre rigide 117 et des articulations 119 des enceintes d'élevage 5 au membre rigide 117.

Les articulations 119 sont configurées pour permettre un pivotement des enceintes 5 par rapport au membre rigide 117.

Le membre rigide 117 est unique et commun à toutes les liaisons intermédiaires 97. Il permet de lier toutes les enceintes d'élevage 5 les unes aux autres.

En d'autres termes, les liaisons intermédiaires 97 sont des entretoises rigides rassemblées pour former un unique membre rigide.

Ce membre rigide 117 est par exemple une barre ou un tube sensiblement perpendiculaire aux axes de rotation des enceintes d'élevage.

Au repos, le membre rigide 117 est sensiblement vertical.

Les articulations 119 sont des pièces monoblocs, typiquement en matière plastique. Elles comportent chacune une liaison pivotante 121 à l'enceinte d'élevage 5 correspondante, et une liaison rigide 123 au membre rigide 117.

La liaison pivotante 121 est constituée de deux demi-bagues 125, destinées à s'adapter autour du cylindre 65 formé sur le bord distal 57 de l'enceinte d'élevage 5. Les demi-bagues 125 sont décalées le long du cylindre 65. Elles constituent ensemble un palier permettant un pivotement de l'articulation 119 par rapport à l'enceinte d'élevage 5.

La liaison rigide 123 comporte deux flasques 129 placés de part et d'autre du membre rigide 117. Une goupille horizontale 131 est reçue dans un orifice traversant du membre rigide 117. Elle serre les flasques 129 contre le membre rigide 117, de telle sorte que le membre rigide 117 est rigidement fixé à l'articulation 119. Par exemple, un emboîtement supplémentaire par tenon et mortaise est prévu entre les flasques 129 et le membre rigide 117, de manière à éviter tout mouvement relatif entre les deux pièces.

En variante, le membre rigide 117 est monté pivotant autour de la goupille 131 par rapport à l'articulation 119.

Dans la présente variante de réalisation, le dispositif flotteur 10 n'est pas nécessairement lié à l'enceinte d'élevage supérieure.

Par exemple, le dispositif flotteur 10 est fixé au membre rigide 117.

Par ailleurs, le dispositif limiteur 86 peut coopérer avec n'importe quelle enceinte d'élevage 5 pour limiter le débattement des enceintes d'élevage en rotation vers le haut et/ou vers le bas. Il comprend par exemple au moins un lien souple qui peut être lié à n'importe quelle enceinte d'élevage 5. Ce ou ces liens souples permettent de limiter le débattement des enceintes d'élevage en rotation à la fois vers le haut et vers le bas.

En variante, les liaisons intermédiaires 97 comprennent plusieurs membres rigides, chaque membre rigide liant plusieurs enceintes d'élevage 5 les unes aux autres. Chaque membre rigide est par exemple du type décrit ci-dessus, et est lié aux enceintes correspondantes par des articulations du type décrit ci-dessus.

L'invention peut être également appliquée avec des dispositifs d'élevage disposés sur l'estran, quand on souhaite mettre en mouvement une superposition d'enceintes et/ou travailler avec le même niveau de marée sur toute la surface de l'estran. Ceci permet à l'éleveur de faire des choix zootechniques : fréquence d'agitation, amplitude du mouvement, durée d'agitation.

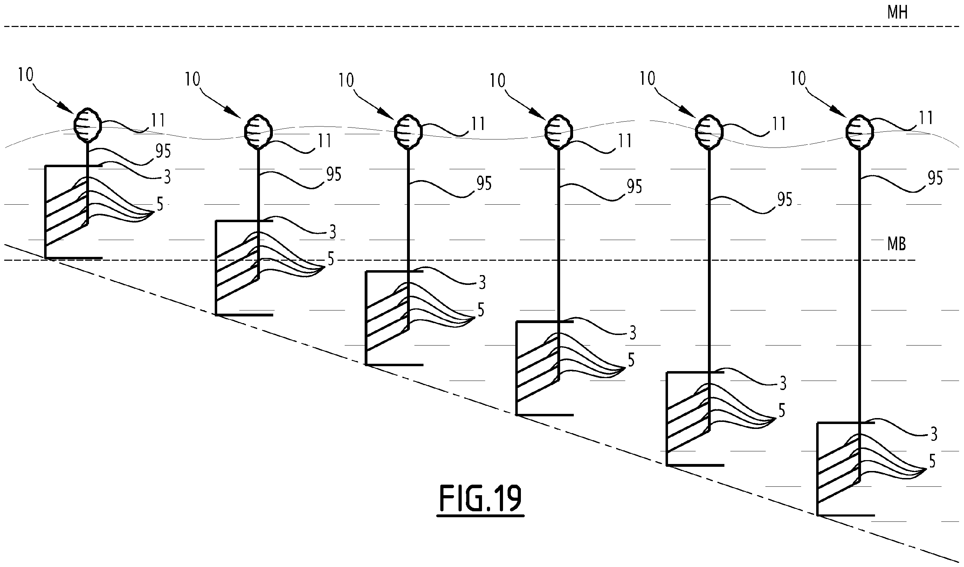

Comme illustré sur la figure 19, plusieurs dispositifs selon le second mode de réalisation peuvent être disposés sur l'estran à différents niveaux de profondeur, les dispositifs flotteurs 10 des différents dispositifs étant réglés pour être placés au même niveau. Ainsi, les liaisons souples 95 des différents dispositifs sont de longueurs variables, comme illustré sur la figure 19. Ces longueurs sont choisies pour que les liaisons souples respectives des différents dispositifs soient tendues pour sensiblement le même niveau d'eau.

En variante, les dispositifs disposés sur l'estran à différents niveaux de profondeur le sont selon le premier mode de réalisation, les dispositifs flotteurs 10 des différents dispositifs étant réglés pour être placés sensiblement au même niveau.

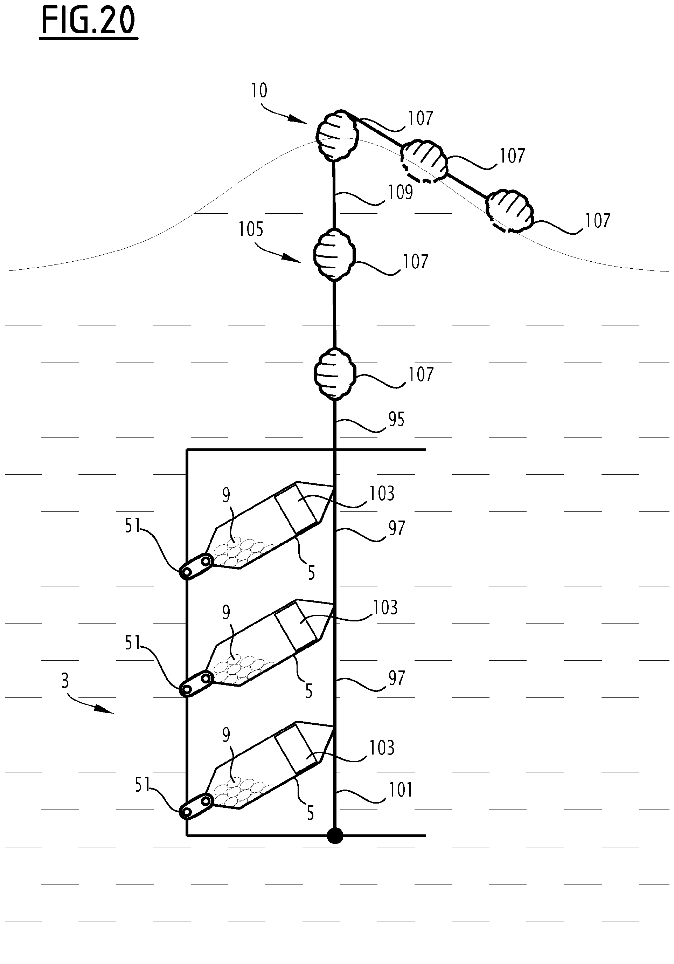

Il est à noter que, dans les premier et second modes de réalisation, chaque enceinte d'élevage est en variante équipée de son propre flotteur 103, en plus du dispositif flotteur 10. Une telle situation est illustrée sur la figure 20. Les flotteurs 103 sont par exemple disposés dans les enceintes 5. Ils sont dimensionnés pour compenser au moins partiellement la masse d'animaux d'aquaculture en fin d'élevage. Ceci permet de limiter la flottabilité du dispositif flotteur 10 nécessaire au mouvement, et donc les efforts transmis par le dispositif flotteur 10 implanté dans l'intervalle du marnage en cas de tempête par exemple. Cet aspect est très important car l'effet cumulé des flotteurs selon leur nombre, leur disposition et leur volume, laisse à l'éleveur la possibilité de déterminer définitivement le montage idéal parfaitement adapté à son site en eau profonde, sachant que les conditions hydrodynamiques sont invariables, tout en tenant compte des risques tempétueux, et donc de lui permettre d'obtenir de manière constante et régulière la qualité de produit qu'il aura choisie.

Selon une autre variante de réalisation applicable aux premier et second modes de réalisation, le dispositif flotteur 10 comprend non pas un unique flotteur mais une guirlande 105 de flotteurs. Un tel agencement est illustré sur la figure 20 Cette guirlande 105 comporte une pluralité de flotteurs 107, montés les uns derrière les autres le long d'un lien souple 109, dont une extrémité inférieure est solidaire de la liaison souple 95.

Avantageusement, le volume, et donc la flottabilité, des flotteurs 107 augmente de l'extrémité supérieure à l'extrémité inférieure du lien souple 109.

Un tel agencement permet une action progressive, plus douce et plus longue dans l'intervalle du marnage choisi.

Cette variante peut être combinée avec la précédente (flotteur 103 propre à chaque enceinte en plus du dispositif flotteur 10).

Selon une variante applicable à tous les modes de réalisation, la liaison 13 n'est pas montée sur le bord proximal de chaque enceinte d'élevage 5. Si on considère le plan médian de l'enceinte d'élevage 5, perpendiculaire au fond inférieur et parallèle aux axes de rotation R1 et R2, la liaison 13 peut lier tout point situé d'un côté de ce plan médian au châssis 3. Le dispositif flotteur 10 est de préférence lié à tout point situé de l'autre côté du plan médian.

De même, les liens souples peuvent être liés à tout point de l'enceinte situé du côté du plan médian opposé à la liaison 13.

L'invention a été décrite pour un dispositif dans lequel les enceintes d'élevage 5 sont liées au châssis par des organes de liaison de type bielle, créant un effort de cisaillement entre les animaux d'aquaculture et l'enceinte sous l'effet du déplacement vertical des enceintes. Toutefois, l'invention est applicable également aux enceintes d'élevage liées au châssis par des liaisons pivotantes simples autour d'un axe de rotation unique, comme décrit dans FR2576484, ou à des systèmes de plateaux pivotants sur lesquels sont posées les enceintes d'élevage, ou à des systèmes de cages contenant de nombreuses enceintes, lesdites cages pouvant pivoter autour d'un axe de façon à assurer un mouvement des enceintes similaires à celui décrit précédemment.

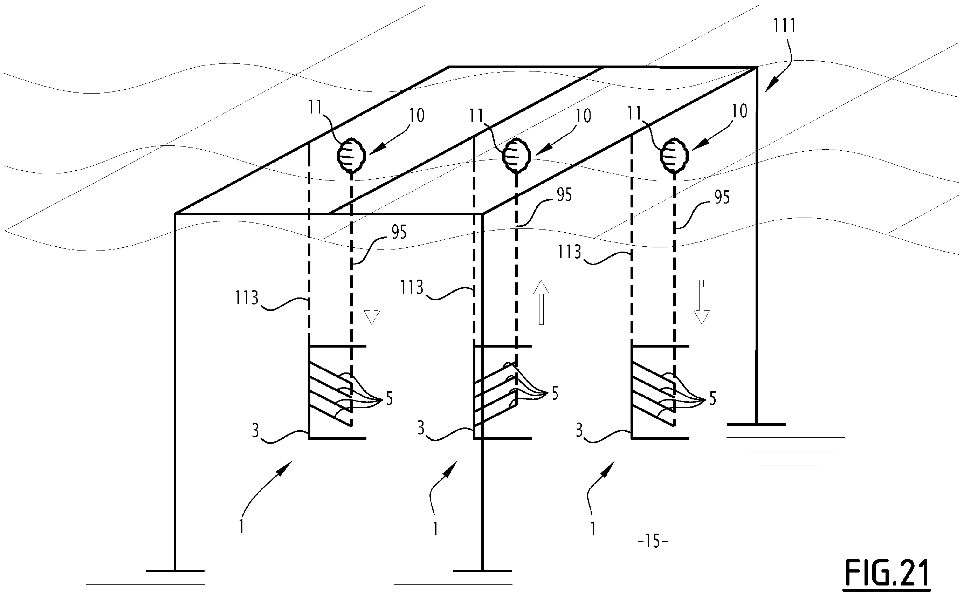

Une autre variante de réalisation va maintenant être décrite, en référence à la figure 21. Elle est applicable à tous les modes de réalisation décrits précédemment.

Dans cette variante de réalisation, le châssis 3 ne repose pas directement sur le fond marin 15. Le châssis 3 est situé un peu au-dessus du fond marin 15. Il est monté par exemple sur une structure porteuse 111, qui repose fixement sur le fond marin 15.

La structure porteuse 111 est de tout type adapté : table, portique, ...

Elle est rigidement fixée sur le fond marin, ou au contraire est seulement lestée de manière à rester en place du fait de son poids propre.

La structure porteuse 111 porte un ou plusieurs dispositifs d'élevage 1. Chaque châssis 3 est monté sur la structure porteuse 111 par tout moyen adapté : barres métalliques rigides 113, soudures directes, câbles métalliques flexibles, etc

L'invention porte également procédé d'élevage en mer d'animaux d'aquaculture, le procédé comprenant une étape d'implantation en mer d'au moins un dispositif d'élevage du type décrit ci-dessus.

Le châssis 3 est placé en fond de mer. La longueur de la liaison souple 95 est choisie pour que le flotteur 11, quand la liaison souple 95 est tendue verticalement, se trouve dans la zone de marnage.

Avantageusement, plusieurs dispositifs tels que décrits ci-dessus sont implantés en mer à l'étape d'implantation. Les châssis 3 desdits dispositifs sont placés sur l'estran à des niveaux respectifs différents. Les longueurs des liaisons souples 95 desdits dispositifs d'élevage sont choisies pour que, quand lesdites liaisons souples 95 sont tendues verticalement, les dispositifs flotteurs 10 des dispositifs d'élevage se trouvent sensiblement au même niveau.

Selon une variante de réalisation, le dispositif limiteur 86 comporte des butées fixes en remplacement ou en plus des liens souples 87, 99, 101.

Ces butées fixes sont rigidement fixées au châssis 3. Certaines butées limitent la course de la ou chaque enceinte d'élevage 5 par rapport au châssis 3 vers le haut, et d'autres butées limitent la course de la ou chaque enceinte d'élevage 5 par rapport au châssis 3 vers le bas.

Dans le second mode de réalisation, les butées sont avantageusement des barres métalliques rigidement fixées au châssis, au-dessus et en-dessous de l'empilement d'enceintes d'élevage.

Un tel agencement est particulièrement bien adapté à la variante de réalisation où les enceintes d'élevage sont fixées sur des plateaux pivotants liés au châssis.

Il est à noter que l'association de quatre aspects techniques complémentaires permet d'obtenir des résultats particulièrement intéressants. Ces quatre aspects contribuent à transférer de manière très efficace aux animaux d'aquaculture un mouvement de cisaillement qui permet de les faire rouler sur une surface et les uns contre les autres de façon à obtenir une limitation de la croissance par rupture séquentielle de la dentelle se concrétisant par un fort engraissement, une propreté et une forme de coquille irréprochables.

Ces quatre aspects techniques sont les suivants.
1. L'utilisation d'une enceinte présentant une surface étendue et plane d'élevage des animaux d'aquaculture.
2. L'utilisation d'un dispositif flotteur lié directement ou indirectement à l'enceinte qui suit le niveau de la mer quand la marée est au niveau du dispositif flotteur, transférant à l'enceinte une variation d'inclinaison du haut vers le bas et du bas vers le haut quand la mer monte et descend, de façon que les animaux d'aquaculture dévalent sur la surface d'élevage ; l'enceinte le cas échéant suit aussi le mouvement ondulatoire des vagues, démultipliant ainsi le mouvement précédent et, le cas échéant lorsque l'enceinte elle-même émerge, créant, grâce à sa surface inférieure ainsi disposée à l'interface air/eau subissant l'effet de la vague venant frapper le dessous de l'enceinte, un effet de lavage par l'eau giclant en surpression à travers les mailles de l'enceinte (effet de soufflage des vagues bien connu dans les cavités rocheuses en bord de mer). Cet effet est particulièrement fort quand l'enceinte présente une surface inférieure large et plate, selon un mode de réalisation privilégié de l'invention.
3. L'utilisation d'une fixation venant se fixer sur deux axes, l'un sur l'enceinte et l'autre sur le support de l'enceinte, formant ainsi une bielle qui convertit le mouvement ascendant/descendant créé par le dispositif flotteur en un mouvement de cisaillement favorisant, à la faveur de leur inertie, le déplacement des animaux d'aquaculture sur la surface plane de l'enceinte ; ceci favorise le décollement des animaux d'aquaculture recollés sur l'enceinte par nacration pendant les périodes de marée sans agitation des enceintes.
4. L'utilisation d'un dispositif limiteur permettant de limiter l'amplitude verticale du mouvement ascendant/descendant dû au dispositif flotteur pour limiter les effets précédant en fonction des besoins zootechniques.

Il existe une synergie entre ces aspects techniques, permettant d'atteindre des résultats particulièrement bons.

Toutefois, il n'est pas nécessaire de mettre en oeuvre conjointement ces quatre aspects techniques. La présente invention bénéficie de la synergie des aspects 1. et 2. pour des enceintes pouvant être immergées en eau profonde, dans la mesure où le dispositif flotteur est disposé dans la zone de marnage.

Ceci permet d'exploiter pour l'élevage des zones qui ne peuvent pas l'être avec des enceintes d'élevage de l'état de la technique, tout en obtenant de très bons résultats pour l'agitation des animaux d'aquaculture. La mise en oeuvre des aspects 3. et/ou 4. en plus des aspect 1. et 2., améliore encore les résultats.

## Revendications

1. Dispositif d'élevage en mer de coquillages, le dispositif (1) comprenant :
- un châssis (3) prévu pour être placé en fond (15) de mer;
- au moins une enceinte d'élevage (5) délimitant intérieurement un volume (7) de réception pour les coquillages (9) ;
- une liaison (13) de ladite au moins une enceinte d'élevage (5) au châssis (3), autorisant une rotation de ladite au moins une enceinte d'élevage (5) par rapport au châssis (3) autour d'au moins un axe de rotation sensiblement horizontal;
- un dispositif flotteur (10) lié à ladite au moins une enceinte d'élevage (5) par une liaison souple (95) de longueur choisie pour que le dispositif flotteur (10), quand la liaison souple (95) est tendue verticalement, se trouve dans la zone de marnage ;
le dispositif étant **caractérisé en ce qu'**il comprend plusieurs enceintes d'élevage (5) situées les unes au-dessus des autres, chacune liée au châssis (3) par une liaison (13) autorisant une rotation de ladite enceinte d'élevage (5) par rapport au châssis (3) autour d'au moins un axe de rotation sensiblement horizontal, toutes les enceintes d'élevage (5) étant liées au même dispositif flotteur (10) ;
**en ce que** chaque enceinte d'élevage (5) présente un fond inférieur (23), sensiblement plat ;
et **en ce que** le dispositif flotteur (10) est configuré de façon qu'il suive le niveau de la mer quand la marée est à son niveau, afin de transférer à l'enceinte d'élevage (5) une variation d'inclinaison du haut vers le bas et du bas vers le haut quand la mer monte et descend, de façon que les coquillages dévalent sur le fond inférieur (23).

2. Dispositif selon la revendication 1, dans lequel la liaison souple (95) raccorde directement l'enceinte d'élevage (5) supérieure au dispositif flotteur (10).

3. Dispositif selon la revendication 1 ou 2, dans lequel chaque enceinte d'élevage (5) est directement raccordée par une liaison intermédiaire (97) à l'enceinte d'élevage (5) immédiatement au-dessus et/ou à l'enceinte d'élevage (5) immédiatement en dessous.

4. Dispositif selon l'une quelconque des revendications 1 à 3, dans lequel les enceintes d'élevage (5) sont liées les unes aux autres par des liaisons intermédiaires (97) comprenant un membre rigide (117) et des articulations (119) des enceintes d'élevage (5) au membre rigide (117).

5. Dispositif selon la revendication 4, dans lequel les articulations (119) sont configurées pour permettre un pivotement des enceintes d'élevage (5) par rapport au membre rigide (117).

6. Dispositif selon l'une quelconque des revendications 1 à 5, dans lequel un premier dispositif limiteur (86) lie l'enceinte d'élevage (5) supérieure au châssis (3), limitant le débattement des enceintes d'élevage (5) vers le bas, le dispositif limiteur (86) étant de préférence un lien souple (99).

7. Dispositif selon l'une quelconque des revendications 1 à 6, dans lequel un deuxième dispositif limiteur (86) lie l'une des enceintes d'élevage (5) au châssis (3), limitant le débattement des enceintes d'élevage (5) vers le haut, le dispositif limiteur (86) étant de préférence un lien souple (101).

8. Dispositif selon l'une quelconque des revendications précédentes, dans lequel chaque enceinte d'élevage (5) présente un bord proximal (55) et un bord distal (57) opposés l'un à l'autre, la liaison (13) liant le bord proximal (55) au châssis (3), le dispositif flotteur (10) étant lié à une zone de chaque enceinte d'élevage (5) située à proximité du bord distal (57).

9. Dispositif selon l'une quelconque des revendications précédentes, dans lequel la liaison (13) autorise une rotation de chaque enceinte d'élevage (5) autour d'un premier axe de rotation (R1) sensiblement horizontal, et une rotation du premier axe de rotation (R1) par rapport au châssis (3) autour d'un second axe de rotation (R2) sensiblement parallèle au premier axe de rotation.

10. Dispositif selon la revendication 9, dans lequel la liaison (13) comporte au moins un organe de liaison (51) de type bielle, monté pivotant sur chaque enceinte d'élevage (5) autour du premier axe de rotation (R1) et monté pivotant sur le châssis (3) autour du second axe de rotation (R2).

11. Dispositif selon la revendication 9 et 10, dans lequel le fond inférieur (23) sensiblement plat est parallèle aux premier et second axes de rotation (R1, R2).

12. Dispositif selon l'une quelconque des revendications 1 à 8, dans lequel la liaison (13) est une liaison pivotante simple autour d'un axe de rotation unique.

13. Dispositif selon l'une quelconque des revendications précédentes, dans lequel le dispositif flotteur (10) comprend une guirlande (105) de flotteurs, la guirlande (105) comportant une pluralité de flotteurs (107), montés les uns derrière les autres le long d'un lien souple (109) dont une extrémité inférieure est solidaire de la liaison souple (95).

14. Ensemble comprenant une pluralité de dispositifs d'élevage (5) selon l'une quelconque des revendications précédentes, les longueurs des liaisons souples (95) des dispositifs d'élevage (5) étant choisies pour que, quand lesdites liaisons souples (95) sont tendues verticalement, les dispositifs flotteurs (10) des dispositifs d'élevage (5) se trouvent sensiblement au même niveau.

15. Procédé d'élevage (5) en mer de coquillages, le procédé comprenant une étape d'implantation en mer d'au moins un dispositif d'élevage (1) selon l'une quelconque des revendications 1 à 13, le châssis (3) étant disposé en fond (15) de mer, la longueur de la liaison souple (95) étant choisie pour que le dispositif flotteur (10), quand la liaison souple (95) est tendue verticalement, se trouve dans la zone de marnage.

16. Procédé selon la revendication 15, dans lequel plusieurs dispositifs (1) selon l'une quelconque des revendications 1 à 13 sont implantés en mer à l'étape d'implantation, les châssis (3) desdits dispositifs d'élevage (1) sont placés sur l'estran à des niveaux respectifs différents, les longueurs des liaisons souples (95) desdits dispositifs d'élevage (1) étant choisies pour que, quand lesdites liaisons souples (95) sont tendues verticalement, les dispositifs flotteurs (10) des dispositifs d'élevage (1) se trouvent sensiblement au même niveau.

## Patentansprüche

1. Vorrichtung zur Aufzucht von Muscheln im Meer, die Vorrichtung (1) umfassend:
- ein Gestell (3), das bereitgestellt ist, um auf dem Meeresboden (15) platziert zu werden;
- mindestens eine Aufzuchtkammer (5), die innen ein Aufnahmevolumen (7) für die Muscheln (9) begrenzt;
- eine Verbindung (13) der mindestens einen Aufzuchtkammer (5) mit dem Gestell (3), die eine Drehung des mindestens einen Aufzuchtkammer (5) in Bezug auf das Gestell (3) um mindestens eine im Wesentlichen horizontale Drehachse zulässt;
- eine Schwimmervorrichtung (10), die durch eine flexible Verbindung (95), deren Länge gewählt ist, sodass sich die Schwimmervorrichtung (10) in der Gezeitenzone befindet, wenn die flexible Verbindung (95) vertikal gespannt ist, mit der mindestens einen Aufzuchtkammer (5) verbunden ist,
wobei die Vorrichtung **dadurch gekennzeichnet ist, dass** sie mehrere Aufzuchtkammern (5) umfasst, die sich übereinander befinden, wobei jede durch eine Verbindung (13), die eine Drehung der Aufzuchtkammer (5) in Bezug auf den Gestell (3) um mindestens eine im Wesentlichen horizontale Drehachse zulässt, mit dem Gestell (3) verbunden ist, wobei alle Aufzuchtkammern (5) mit derselben Schwimmervorrichtung (10) verbunden sind;
dass jede Aufzuchtkammer (5) einen unteren, im Wesentlichen flachen Boden (23) aufweist;
und dass die Schwimmervorrichtung (10) konfiguriert ist, um dem Meeresspiegel folgt, wenn die Flut auf ihrem Niveau ist, um eine Neigungsänderung von oben nach unten und von unten nach oben auf die Aufzuchtkammer (5) zu übertragen, wenn das Meer steigt und sinkt, sodass die Muscheln nach unten auf den unteren Boden (23) rutschen.

2. Vorrichtung nach Anspruch 1, wobei die flexible Verbindung (95) die obere Aufzuchtkammer (5) direkt mit der Schwimmervorrichtung (10) verbindet.

3. Vorrichtung nach Anspruch 1 oder 2, wobei jede Aufzuchtkammer (5) über eine Zwischenverbindung (97) direkt mit der unmittelbar darüber liegenden Aufzuchtkammer (5) und/oder der unmittelbar darunter liegenden Aufzuchtkammer (5) verbunden ist.

4. Vorrichtung nach einem der Ansprüche 1 bis 3, wobei die Aufzuchtkammern (5) durch Zwischenverbindungen (97) miteinander verbunden sind, umfassend ein starres Glied (117) und Gelenke (119) der Aufzuchtkammern (5) an dem starren Glied (117).

5. Vorrichtung nach Anspruch 4, wobei die Gelenke (119) konfiguriert sind, um ein Schwenken der Aufzuchtkammern (5) in Bezug auf das starre Glied (117) zu ermöglichen.

6. Vorrichtung nach einem der Ansprüche 1 bis 5, wobei eine erste Begrenzungsvorrichtung (86) die obere Aufzuchtkammer (5) mit dem Gestell (3) verbindet, was die Auslenkung der Aufzuchtkammern (5) nach unten begrenzt, wobei die Begrenzungsvorrichtung (86) vorzugsweise ein flexibles Band (99) ist.

7. Vorrichtung nach einem der Ansprüche 1 bis 6, wobei eine zweite Begrenzungsvorrichtung (86) eine der Aufzuchtkammern (5) mit dem Gestell (3) verbindet, was die Auslenkung der Aufzuchtkammern (5) nach oben begrenzt, wobei die Begrenzungsvorrichtung (86) vorzugsweise ein flexibles Band (101) ist.

8. Vorrichtung nach einem der vorherigen Ansprüche, wobei jede Aufzuchtkammer (5) einen proximalen Rand (55) und einen distalen Rand (57) aufweist, die einander gegenüberliegen, wobei die Verbindung (13) den proximalen Rand (55) mit dem Gestell (3) verbindet, wobei die Schwimmervorrichtung (10) mit einem Bereich von jeder Aufzuchtkammer (5) verbunden ist, der sich in der Nähe des distalen Rands (57) befindet.

9. Vorrichtung nach einem der vorherigen Ansprüche, wobei die Verbindung (13) eine Drehung von jeder Aufzuchtkammer (5) um eine erste, im Wesentlichen horizontale Drehachse (R1) und eine Drehung der ersten Drehachse (R1) in Bezug auf das Gestell (3) um eine zweite Drehachse (R2), die im Wesentlichen parallel zu der ersten Drehachse ist, zulässt.

10. Vorrichtung nach Anspruch 9, wobei die Verbindung (13) mindestens ein Verbindungsorgan (51) vom Typ Pleuelstange umfasst, das schwenkbar um die erste Drehachse (R1) an jeder Aufzuchtkammer (5) montiert ist und schwenkbar um die zweite Drehachse (R2) an dem Gestell (3) montiert ist.

11. Vorrichtung nach Anspruch 9 und 10, wobei der im Wesentlichen flache untere Boden (23) parallel zu der ersten und der zweiten Drehachse (R1, R2) ist.

12. Vorrichtung nach einem der Ansprüche 1 bis 8, wobei die Verbindung (13) eine einfache Schwenkverbindung um eine einzige Drehachse ist.

13. Vorrichtung nach einem der vorherigen Ansprüche, wobei die Schwimmervorrichtung (10) eine Girlande (105) von Schwimmern umfasst, die Girlande (105) umfassend eine Vielzahl von Schwimmern (107), die hintereinander entlang eines flexiblen Bands (109) montiert sind, dessen unteres Ende fest mit der flexiblen Verbindung (95) verbunden ist.

14. Anordnung, umfassend eine Vielzahl von Aufzuchtvorrichtungen (5) nach einem der vorherigen Ansprüche, wobei die Längen der flexiblen Verbindungen (95) der Aufzuchtvorrichtungen (5) gewählt sind, sodass sich die Schwimmervorrichtungen (10) der Aufzuchtvorrichtungen (5), wenn die flexiblen Verbindungen (95) vertikal gespannt sind, im Wesentlichen auf derselben Höhe befinden.

15. Verfahren (5) zur Aufzucht von Muscheln im Meer, das Verfahren umfassend einen Schritt eines Aufstellens im Meer mindestens einer Aufzuchtvorrichtung (1) nach einem der Ansprüche 1 bis 13, wobei das Gestell (3) auf dem Meeresboden (15) angeordnet wird, die Länge der flexiblen Verbindung (95) gewählt ist, sodass sich die Schwimmervorrichtung (10) in der Gezeitenzone befindet, wenn die flexible Verbindung (95) vertikal gespannt ist.

16. Verfahren nach Anspruch 15, wobei bei dem Schritt eines Aufstellens mehrere Vorrichtungen (1) nach einem der Ansprüche 1 bis 13 im Meer aufgestellt werden, die Gestelle (3) der Aufzuchtvorrichtungen (1) auf dem Watt in jeweils unterschiedlichen Höhen angeordnet werden, wobei die Längen der flexiblen Verbindungen (95) der Aufzuchtvorrichtungen (1) gewählt sind, sodass, wenn die flexiblen Verbindungen (95) vertikal gespannt sind, sich die Schwimmervorrichtungen (10) der Aufzuchtvorrichtungen (1) im Wesentlichen auf der gleichen Höhe befinden.

## Claims

1. A device for rearing shellfish at sea, the set-up (1) comprising:
- a frame (3) intended to be placed on the seabed (15);
- at least one rearing enclosure (5) delimiting internally a receiving volume (7) for shellfish (9);
- a link (13) of said at least one rearing enclosure (5) to the frame (3), permitting a rotation of said at least one rearing enclosure (5) with respect to the frame (3) about at least one substantially horizontal axis of rotation;
- a float system (10) linked to said at least one rearing enclosure (5) by a flexible link (95) of length chosen so that the float system (10), when the flexible link (95) is tensioned vertically, is in the tidal range zone;
the device being **characterized in that** same comprises a plurality of rearing enclosures (5) located one above the other, each connected to the frame (3) by a link (13) permitting a rotation of said rearing enclosure (5) with respect to the frame (3) about at least one substantially horizontal axis of rotation, all the rearing enclosures (5) being connected to the same float system (10);
**in that** each rearing enclosure (5) has a lower bottom (23), substantially flat;
and **in that** the float system (10) is configured to follow the sea level when the tide is at sea level, in order to transfer to the rearing enclosure (5) a variation in inclination from top downwards and from bottom upwards as the sea rises and descends, so that the shells descend to the lower bottom (23).

2. The device according to claim 1, wherein the flexible connection (95) directly connects the upper rearing enclosure (5) to the float system (10).

3. The device according to claim 1 or 2, wherein each rearing enclosure (5) is directly linked via an intermediate link (97) to the immediately above rearing enclosure (5) and/or to the immediately below rearing enclosure (5).

4. The device according to any of claims 1 to 3, wherein the rearing enclosures (5) are linked to each other by intermediate links (97) comprising a rigid member (117) and hinges (1 9) of the rearing enclosures (5) to the rigid member (117).

5. The device according to claim 4, wherein the articulations (119) are configured to allow the rearing enclosures (5) to be pivoted relative to the rigid member (117).

6. The device according to any of claims 1 to 5, wherein a first limiter system (86) links the upper rearing enclosure (5) to the frame (3), limiting the downward movement of the rearing enclosures (5), the limiter system (86) preferably being a flexible link (99).

7. The device according to any of claims 1 to 6, wherein a second limiter system (86) links one of the rearing enclosures (5) to the frame (3), limiting the upward movement of the rearing enclosures (5), the limiter system (86) preferably being a flexible link (101).

8. The device according to any of the preceding claims, wherein each rearing enclosure (5) has a proximal edge (55) and a distal edge (57) opposite each other, the link (13) connecting the proximal edge (55) to the frame (3), the float system (10) being connected to a zone of each rearing enclosure (5) locate near the distal edge (57).

9. The device according to any of the preceding claims, wherein the link (13) permits a rotation of each rearing enclosure (5) about a first substantially horizontal axis of rotation (R1), and a rotation of the first axis of rotation (R1) relative to the frame (3) about a second axis of rotation (R2) substantially parallel to the first axis of rotation.

10. The device according to claim 9, wherein the link (13) includes at least one connecting member (51) such as a connecting rod, which is pivotally mounted on each rearing enclosure (5) about the first axis of rotation (R1) and pivotally mounted on the frame (3) about the second axis of rotation (R2).

11. The device according to claim 9 and 10, wherein the substantially flat bottom (23) is parallel to the first and second axes of rotation (R1, R2).

12. An apparatus according to any of claims 1 to 8, wherein the linkage (13) is a single pivotal link about a single axis of rotation.

13. The device according to any of the preceding claims, wherein the float system (10) comprises a string (105) of floats, the string (105) including a plurality of floats (107), mounted one behind the other along a flexible link (109), a lower end of which is rigidly attached to the flexible link (95).

14. An assembly comprising a plurality of rearing devices (5) according to any of the preceding claims, the lengths of the flexible links (95) of the rearing devices (5) being selected so that when said flexible links (95) are vertically tensioned, the float systems (10) of the rearing devices (5) are substantially at the same level.

15. A method of rearing (5) shellfish at sea, the method comprising a step of installing at sea at least one rearing device (1) according to any of claims 1 to 13, the frame (3) being arranged on the seabed (15), the length of the flexible link (95) being chosen so that the float system (10), when the flexible link (95) is tensioned vertically, is in the tidal range zone.

16. The method according to claim 15, wherein a plurality of devices (1) according to any of claims 1 to 13 are installed offshore during an installation step, the frames (3) of said rearing devices (1) being placed on the foreshore at different respective levels, the lengths of the flexible links (95) of said rearing devices (1) being chosen so that, when said flexible links (95) are tensioned vertically, the float systems (10) of the rearing devices (1) are substantially at the same level.
